# EUROPEAN PATENT SPECIFICATION

(11) **EP 3 076 311 B1**
(45) Date of publication and mention of the grant of the patent: **26.09.2018**
(21) Application number: 16161305.4
(22) Date of filing: 21.03.2016
(51) Int. Cl.: G06F 17/30

(54) **LAYERED MAP PRESENTATION FOR INDUSTRIAL DATA**
GESCHICHTETE KARTENDARSTELLUNG FÜR INDUSTRIELLE DATEN
PRÉSENTATION DE CARTE EN COUCHES DE DONNÉES INDUSTRIELLES

(30) Priority: 31.03.2015 US 201514675129
(43) Date of publication of application: 05.10.2016
(73) Proprietor: Rockwell Automation Technologies, Inc., Mayfield Heights, OH 44124 (US)
(72) Inventor: BILLI, Sharon, Euclid, OH 44132 (US); COMO, Christopher W., Chagrin Falls, OH 44023 (US); GRAY, Edward A., Olmsted Township, OH 44138 (US); REISSNER, Kyle K., Hudson, OH 44236 (US); SINGHAI, Mohit, Lyndhurst, OH 44124 (US); REICHARD, Douglas J., Fairview Park, OH 44126 (US); SANDLER, Scott N., Chagrin Falls, OH 44023 (US); BLISS, Ronald E., Twinsburg, OH 44087 (US); PANTALEANO, Michael J., Willoughby, OH 44094 (US); CAHALANE, Ryan, Chagrin Falls, OH 44023 (US); KORPELA, Jessica, Milwaukee, WI 53207 (US); MCCLEAVE, Bruce T., Mission Viejo, CA 92692 (US)
(74) Representative: Grünecker Patent- und Rechtsanwälte PartG mbB

(56) References cited:
- EP-A2- 2 592 812
- US-A1- 2012 259 436

## Description

### BACKGROUND

The subject matter disclosed herein relates generally to industrial automation systems, and, more particularly, to a dynamic search engine capable of indexing and searching plant-wide industrial data across a range of different data source platforms and delivering search results using a layered map presentation.

EP 2 592 812 A2 relates to an integrated and scalable architecture for accessing and delivering data. A distributed and scalable data historian framework is provided that allows historian functionality to be efficiently incorporated at various levels of an industrial enterprise. The framework includes a historian data interface system that provides a single interface and common protocol for configuring, managing, and viewing historian data located throughout a network of historian distributed across the industrial enterprise. The historian data interface system leverages a data model that models the enterprise and sources of historian data to facilitate fast and efficient retrieval of desired historian data. By unifying the distributed historians under a common framework, the data model can facilitate enterprise-level management of historian data collection and storage.

It is the object of the present invention to provide an improved system for presenting and interacting with industrial data.

This object is solved by the subject matter of the appended independent claims.

Embodiments are defined by the appended dependent claims.

### SUMMARY

The invention is set out in the appended claims.

### BRIEF DESCRIPTION OF THE DRAWINGS

FIG. 1 is a block diagram of an example industrial control environment.
FIG. 2 is a conceptual diagram illustrating industrial data federation.
FIG. 3 is a block diagram of an example multi-platform industrial search system.
FIG. 4 is a block diagram of a generalized example architecture including a multi-platform industrial search system that discovers and indexes multi-platform data throughout an industrial environment.
FIG. 5 is a block diagram illustrating components of the multi-platform industrial search system.
FIG. 6 is an example, generalized depiction of a layered result presentation generated by the multi-platform industrial search system.
FIG. 7 is a representation of an example, non-limiting hierarchical categorization for presentation of search result layers.
FIG. 8 is an example physical layer view of a layered map presentation.
FIG. 9 is an example composite view of industrial search results comprising a physical layer and an alarm layer.
FIG. 10 is an example composite view of industrial search results comprising physical and controller layers.
FIG. 11 is an example composite view of industrial search results comprising physical, controller, and I/O layers.
FIG. 12 is an example composite view of industrial search results comprising physical, controller, and I/O layers.
FIG. 13 is an example composite view of industrial search results comprising physical, controller, and maintenance layers.
FIG. 14 is an example tabbed interface displaying search results on a physical layer.
FIG. 15 is an example tabbed interface displaying search results on a human-machine interface (HMI) layer.
FIG. 16 is an example tabbed interface displaying search results on a control logic layer.
FIG. 17A is block diagram illustrating remote launching of an application on a client device.
FIG. 17B is a block diagram illustrating delivery of live data to an application that has been remotely launched on a client device by the industrial search system.
FIG. 17C is a block diagram illustrating launching of an application on a first client device in response to a launch request received from a second client device.
FIG. 18 is a block diagram illustrating an example architecture for remotely launching an industrial application.
FIG. 19 is a block diagram illustrating another example architecture for remotely launching an industrial application.
FIG. 20A is a diagram illustrating receipt of an interactive layered map presentation in response to submission of a search query to an industrial search system.
FIG. 20B is a diagram illustrating provision of feedback information to an industrial search system through interaction with a layered map presentation.
FIG. 21 is a diagram illustrating an example configuration for incorporating video information into layered search result presentations generated by an industrial search system.
FIG. 22 is an example, non-limiting layered presentation that includes a video window for streaming video information.
FIG. 23 is an example, non-limiting layered map presentation on which heat map information representing employee locations is superimposed.
FIG. 24 is an example, non-limiting layered map presentation on which heat map information representing employee locations and a video window for streaming video information is superimposed.
FIG.25 is a conceptual diagram of a generalized cloud-based implementation for an industrial search system.
FIG. 26 is a block diagram illustrating a cloud-based industrial search service.
FIG. 27 is a flowchart of an example methodology for indexing and searching multi-platform industrial data.
FIG. 28 is a flowchart of an example methodology for performing multiple searches of a federated data model via interaction with a layered map search result interface.
FIG. 29 is an example computing environment.
FIG. 30 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (e.g., screwed or bolted) or removable affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; e.g., the set with no elements therein. Thus, a "set" in the subject disclosure includes one or more elements or entities. As an illustration, a set of controllers includes one or more controllers; a set of data resources includes one or more data resources; etc. Likewise, the term "group" as utilized herein refers to a collection of one or more entities; e.g., a group of nodes refers to one or more nodes.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches also can be used.

Industrial controllers and their associated I/O devices are central to the operation of modern automation systems. These controllers interact with field devices on the plant floor to control automated processes relating to such objectives as product manufacture, material handling, batch processing, supervisory control, and other such applications. Industrial controllers store and execute user-defined control programs to effect decision-making in connection with the controlled process. Such programs can include, but are not limited to, ladder logic, sequential function charts, function block diagrams, structured text, or other such platforms.

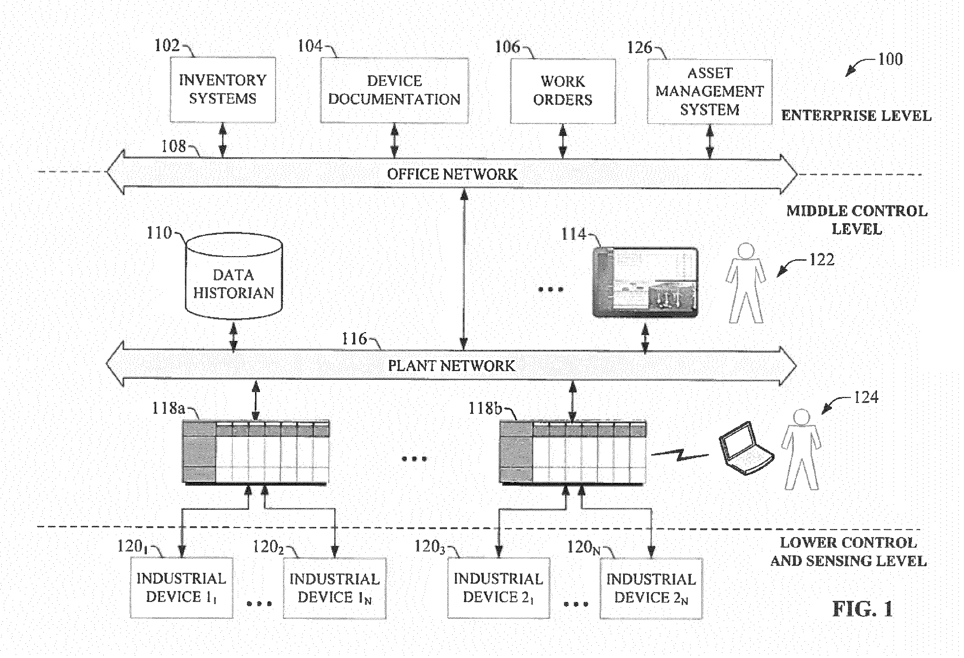

FIG. 1 is a block diagram of an example industrial control environment 100. In this example, a number of industrial controllers 118 are deployed throughout an industrial plant environment to monitor and control respective industrial systems or processes relating to product manufacture, machining, motion control, batch processing, material handling, or other such industrial functions. Industrial controllers 118 typically execute respective control programs to facilitate monitoring and control of industrial devices 120 making up the controlled industrial systems. One or more industrial controllers 118 may also comprise a soft controller executed on a personal computer or other hardware platform, or a hybrid device that combines controller functionality with other functions (e.g., visualization). The control programs executed by industrial controllers 118 can comprise any conceivable type of code used to process input signals read from the industrial devices 120 and to control output signals generated by the industrial controllers, including but not limited to ladder logic, sequential function charts, function block diagrams, or structured text.

Industrial devices 120 may include both input devices that provide data relating to the controlled industrial systems to the industrial controllers 118, and output devices that respond to control signals generated by the industrial controllers 118 to control aspects of the industrial systems. Example input devices can include telemetry devices (e.g., temperature sensors, flow meters, level sensors, pressure sensors, etc.), manual operator control devices (e.g., push buttons, selector switches, etc.), safety monitoring devices (e.g., safety mats, safety pull cords, light curtains, etc.), and other such devices. Output devices may include motor drives, pneumatic actuators, signaling devices, robot control inputs, valves, and the like.

Industrial controllers 118 may communicatively interface with industrial devices 120 over hardwired or networked connections. For example, industrial controllers 118 can be equipped with native hardwired inputs and outputs that communicate with the industrial devices 120 to effect control of the devices. The native controller I/O can include digital I/O that transmits and receives discrete voltage signals to and from the field devices, or analog I/O that transmits and receives analog voltage or current signals to and from the devices. The controller I/O can communicate with a controller's processor over a backplane such that the digital and analog signals can be read into and controlled by the control programs. Industrial controllers 118 can also communicate with industrial devices 120 over a network using, for example, a communication module or an integrated networking port. Exemplary networks can include the Internet, intranets, Ethernet, DeviceNet, ControlNet, Data Highway and Data Highway Plus (DH/DH+), Remote I/O, Fieldbus, Modbus, Profibus, wireless networks, serial protocols, and the like. The industrial controllers 118 can also store persisted data values that can be referenced by the control program and used for control decisions, including but not limited to measured or calculated values representing operational states of a controlled machine or process (e.g., tank levels, positions, alarms, etc.) or captured time series data that is collected during operation of the automation system (e.g., status information for multiple points in time, diagnostic occurrences, etc.).

Industrial automation systems often include one or more human-machine interfaces (HMIs) 114 that allow plant personnel to view telemetry and status data associated with the automation systems, and to control some aspects of system operation. HMIs 114 may communicate with one or more of the industrial controllers 118 over a plant network 116, and exchange data with the industrial controllers to facilitate visualization of information relating to the controlled industrial processes on one or more pre-developed operator interface screens. HMIs 114 can also be configured to allow operators to submit data to specified data tags or memory addresses of the industrial controllers 118, thereby providing a means for operators to issue commands to the controlled systems (e.g., cycle start commands, device actuation commands, etc.), to modify setpoint values, etc. HMIs 114 can generate one or more display screens through which the operator interacts with the industrial controllers 118, and thereby with the controlled processes and/or systems. Example display screens can visualize present states of industrial systems or their associated devices using graphical representations of the processes that display metered or calculated values, employ color or position animations based on state, render alarm notifications, or employ other such techniques for presenting relevant data to the operator. Data presented in this manner is read from industrial controllers 118 by HMIs 114 and presented on one or more of the display screens according to display formats chosen by the HMI developer.

Industrial controllers 118 and HMIs 114 comprise two sources of information relating to the industrial processes and systems being controlled within the plant environment. Since HMIs 114 leverage data from industrial controllers 118 to facilitate visualization of the controlled systems, both the industrial controllers 118 and the HMIs 114 may contain information relating a common aspect of the industrial systems. For example, the control programming (e.g., ladder logic, sequential function chart, etc.) for controlling operation of a particular tank used in a batch process may execute on one of the industrial controllers 118, while the operator interface screens for viewing a graphical representation of the tank's current status and relevant setpoints (e.g., level setponts, maximum flow setpoints, etc.) may be viewed on one of the HMIs 114. However, since these two sources of information are segregated cross two different data sources and platforms, operators and maintenance personnel are typically only able to view one source of information at a time. That is, operators may choose to view the operator interface screens for the tank of interest on the relevant HMI terminal (see operator 122), or may connect a personal computing device (e.g., a laptop computer) to the industrial controller to view the control programming used to control the tank's operation (see operator 124). In most cases, the operator must be in physical proximity to either the HMI terminal or the industrial controller in order to view the information on that particular data source. Consequently, during troubleshooting of maintenance issues involving the tank, personnel must travel to the source of the information (e.g., the HMI terminal or industrial controller, which are often located near the physical machine being controlled) and locally search each of the HMI and the industrial controller individually.

Some industrial environments may also include other sources of potentially relevant information relating to specific aspects of the controlled industrial systems. These may include, for example, a data historian 110 that aggregates and stores production information collected from the industrial controllers 118 or other data sources, or a device documentation store 104 containing electronic documentation for the various industrial devices making up the controlled industrial systems. Other information sources may include an inventory tracking system 102, a work order management system 106, an asset management system 126 containing an archive of configuration and application projects for various devices and components of the industrial control systems throughout the plant, repositories for machine or process drawings and documentation, vendor product documentation storage, vendor knowledgebases, internal knowledgebases, or other such systems, some or all of which may reside on an office network 108 of the industrial environment. These diverse information sources are spread across many locations and systems both within the plant environment and externally (e.g., on the Internet). When diagnosing problems, maintenance personnel are often required to search several of these sources of information individually, using several different software packages specific to the respective data sources being searched. Moreover, searching for information pertaining to a particular device or machine often requires an extensive knowledge of the overall industrial system in order to locate the data source (e.g., industrial controllers, HMIs, etc.), to be searched, as well as to identify the relevant operator screens and control program routines. Individually searching each of these data sources in connection with solving a system downtime issue or other problem can delay correction of maintenance issues, resulting in lost revenue and scheduling problems.

To address these and other issues, one or more embodiments of the present disclosure provide a multi-platform industrial search system that allows a user to search multiple disparate industrial data platforms for information of interest. The search system is built on a search platform that unifies plant-wide control system information from multiple diverse sources under a common namespace, or federated data model. The system can present search results using a layered map presentation rather than (or in addition to) a linear list of search results. An example layered map for presentation of search results may include one or more of a physical layer that graphically depicts a physical layout of industrial assets (e.g., machines, devices, etc.) relevant to the search query, a network layer illustrating the communication paths between the assets and associated network infrastructure devices, an alarm map depicting relevant alarm information generated by the various industrial assets within the plant environment, a controller layer that illustrates the controllers that supervise the machines and devices comprising the area depicted in the physical layer, one or more operational data or I/O layers illustrating statuses or telemetry information associated with respective machines or devices, or other such layers.

In some embodiments, the layers may correspond to tiered hierarchical views of the industrial environment; e.g., an enterprise view at the highest level, down through a plant view, a workcell view, a machine view, a device view, and an I/O view. The search system can present search results (and other relevant data determined to be relevant to the search query) within each of these defined layers, allowing the user to navigate up or down through the layers to view different aspects of an element being searched (e.g., a machine, a device, an alarm, etc.). For example, a search for a particular tank may return a layer depicting a physical view of the tank (e.g., a graphical representation of the tank indicating its location within the plant), a layer depicting the I/O devices associated with the tank (e.g., sensors, meters, actuating devices, controlled valves, etc.), a layer depicting network connections between the tank and other system components, and/or other layers. In some embodiments, the search system can launch separate applications for displaying the control programming or HMI screens associated with selected elements presented on the layered map presentations.

Layers can be viewed individually, or superimposed on one another such that selected layers can be added or removed by the user as desired. In some embodiments, the search system itself may select the layers determined to be most relevant to the search result, based both on the content of the search query and relevant context information (e.g., a current alarm situation, a previous search history, a maintenance history, etc.). For example, if a user submits a search for a particular device or machine to a namespace the system may turn off one or more layers of the presentation determined to be irrelevant to the search context based on such factors as a current state of the device being searched (e.g., whether the device is in an alarm state), a maintenance issue known by the system to be active, or other contextual factors.

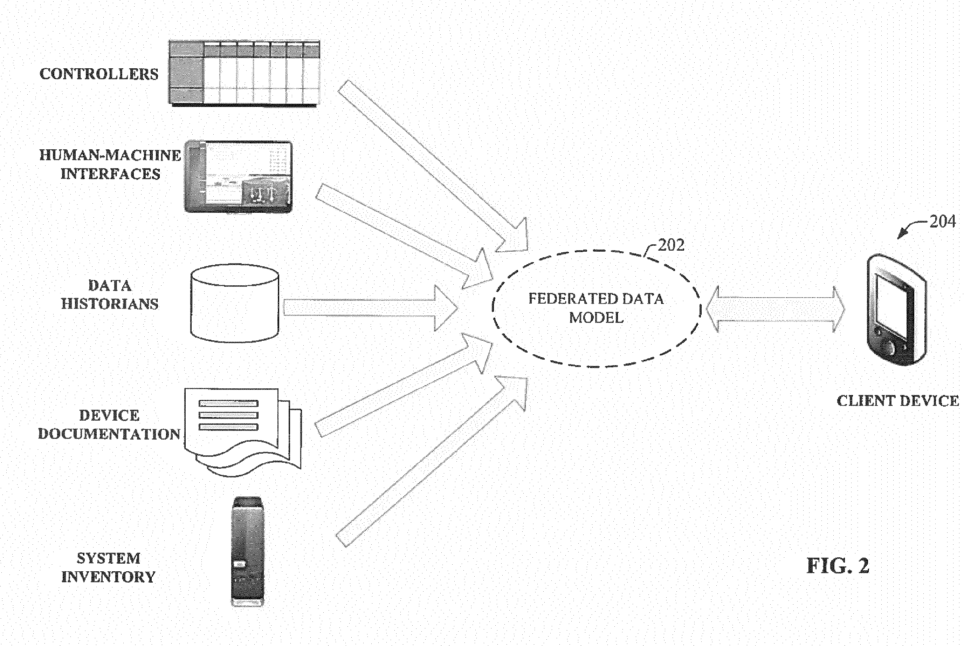

FIG. 2 is a conceptual diagram illustrating federation of industrial data by the indexing system. In one or more embodiments, the multi-platform industrial search engine indexes data from multiple sources both across the industrial facility and external to the facility, including but not limited to industrial controllers, HMIs, data historians, device and system documentation repositories (e.g., drawings, manuals, knowledgebase articles, etc.), system inventory management systems, asset configuration archives, personnel databases containing information for respective plant employees (e.g., skills, roles, current or scheduled locations, etc.), and/or other such platforms. The search system indexes and correlates this multi-platform data to yield a federated data model 202 that can be accessed and searched by a client device 204.

In an example scenario, client device 204 may submit a search request for a particular data tag (e.g., Tank1) to the federated data model 202. Based on the indexed plant-wide information recorded in the model, the industrial search system can locate all instances of the specified data tag across the disparate data sources and deliver a set of search results identifying all discovered instances categorized according to data platform. The search results can be presented across multiple graphical views or layers that are each specific to a particular category or scope. In some embodiments, the system can allow a user to scroll through the different layers in order to view the results at a desired level or granularity. In addition or alternatively, the layers can be selectively superimposed to yield a composite search result presentation that displays multiple views of the search results simultaneously. For example, the search system may present a physical view of the search results that graphically represents physical locations of machines or devices that relate to a particular data tag being searched, an alarm view that displays active or historical alarms relating to the machines or to the data tag, and an I/O view that depicts status information for I/O devices associated with the machines and devices. The system may present these views individually based on user selection, or simultaneously as a composite view that allows the user to add or remove layers as desired. In one or more embodiments, the system may also generate a list view that lists thumbnail representations for the various available views of the search results, where selection of a view from the list causes the system to navigate to the selected view.

Other search result layers can include, but are not limited to, a network layer that depicts network infrastructure devices and communication connections between the machines or devices, an alarm layer that displays a set of active or historical alarms relevant to the data tag being searched, a controller layer that graphically depicts industrial controllers relevant to the search query (e.g., controllers that contain instances of a requested data tag or related information) and the machines or devices controlled by the industrial controller, a maintenance history view that displays active maintenance orders or maintenance history information for relevant machines or devices, and other such views.

One or more embodiments of the multi-platform search system may also include dynamic search and notification features. With a plant's industrial data indexed in the federated search model, one or more dynamic search engines can be configured to access the model automatically in the background to quickly identify issues requiring attention. When a maintenance issue is detected, the system can collect information about the issue and send a notification and the collected information to one or more plant employees determined to be suited to address the maintenance issue based on a record of the employees' skills, locations relative to the source of the issue, and/or availability.

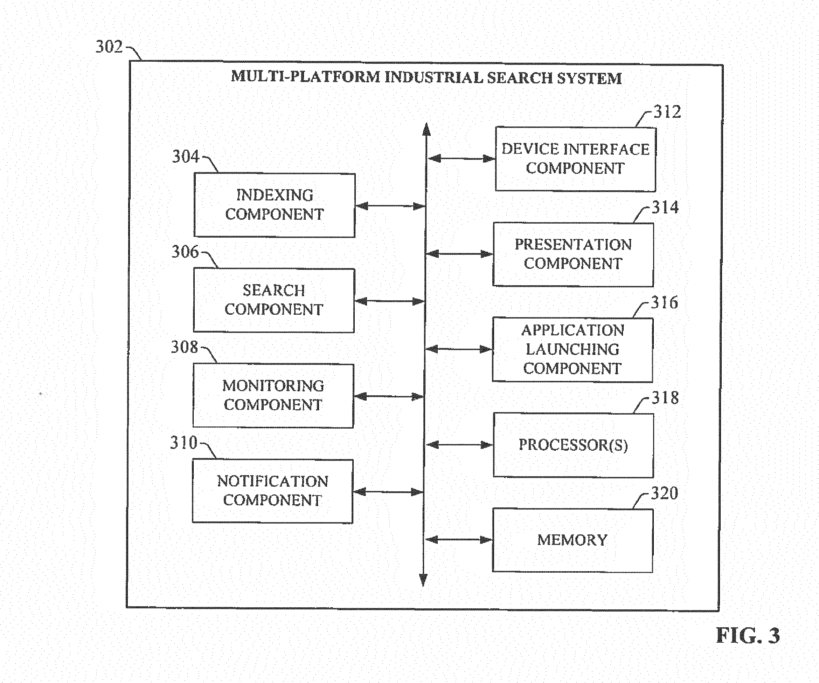

FIG. 3 is a block diagram of an example multi-platform industrial search system 302 according to one or more embodiments of this disclosure. Aspects of the systems, apparatuses, or processes explained in this disclosure can constitute machine-executable components embodied within machine(s), e.g., embodied in one or more computer-readable mediums (or media) associated with one or more machines. Such components, when executed by one or more machines, e.g., computer(s), computing device(s), automation device(s), virtual machine(s), etc., can cause the machine(s) to perform the operations described.

Multi-platform industrial search system 302 can include an indexing component 304, a search component 306, a monitoring component 308, a notification component 310, a device interface component 312, a presentation component 314, an application launching component 316, one or more processors 318, and memory 320. In various embodiments, one or more of the indexing component 304, search component 306, monitoring component 308, notification component 310, device interface component 312, presentation component 314, application launching component 316, the one or more processors 318, and memory 320 can be electrically and/or communicatively coupled to one another to perform one or more of the functions of the multi-platform industrial search system 302. In some embodiments, components 304, 306, 308, 310, 312, 314, and 316 can comprise software instructions stored on memory 320 and executed by processor(s) 318. Multi-platform industrial search system 302 may also interact with other hardware and/or software components not depicted in FIG. 3. For example, processor(s) 316 may interact with one or more external user interface devices, such as a keyboard, a mouse, a display monitor, a touchscreen, or other such interface devices.

Indexing component 304 can be configured to gather information about an industrial automation system and to generate a federated data model defining locations and sources of data items throughout the industrial system, as well as relationships between the data items. For example, some embodiments of indexing component 304 may be configured to deploy a crawler entity that traverses a plant network and discovers the data items and their interdependencies. The resulting indexing information generated by the crawler can be returned to the indexing component 304, which builds a searchable federated data model (e.g., federated data model 202) capable of identifying and reporting sources of specific data items or tags, as well as relevant contextual data relating to a specified data item.

Search component 306 can be configured to submit search queries to the federated data model and retrieve search results identifying locations of requested data items throughout the industrial system. In some embodiments, search component 306 may additionally be configured to perform searches of external sources (e.g., web-based searches), or to off-load supplemental searches to such external sources, in order to supplement local search results with external information relevant to the search query. Search component 306 can be configured to classify the search results according to the platform of the respective data sources on which the results were found (e.g., control logic, HMI, etc.), as well as the network and/or physical location (e.g., production area) in which the information is located. For search results corresponding to web content (e.g., vendor knowledgebase websites), the search component 306 can generate links that facilitate direct navigation to the web content.

Monitoring component 308 can be configured to monitor the indexed data items for defined trigger conditions, and to submit automated queries to the federated data model in response to detection of a trigger condition. The defined trigger conditions can correspond to conditions indicative of a performance or operational issue relating to the industrial system (e.g., a downtime condition, an abnormal condition, a non-optimal operation condition, etc.). Notification component 310 can be configured to send notifications to one or more selected recipients in response to detection of a trigger condition by monitoring component 308. The notification can include additional information about the performance issue corresponding to the trigger condition, where the additional information is retrieved from the federated data model based on the automated search query submitted by the monitoring component 308 in response to the trigger.

Device interface component 312 can be configured to exchange information between the multi-platform industrial search system 302 and a client device having authorization to access the system. For example, the device interface component can receive search queries from the client device for submission to the federated data model, as well as deliver search results and notifications to the client device.

Presentation component 314 can be configured to format the search results into one or more graphical layers for presentation on the user's client device. Application launching component 316 can be configured to remotely launch appropriate platform-specific applications on the client device (or another device such as a standalone maintenance workstation) in response to selection of a search result or application-specific tab on a layered search result interface. The one or more processors 318 can perform one or more of the functions described herein with reference to the systems and/or methods disclosed. Memory 320 can be a computer-readable storage medium storing computer-executable instructions and/or information for performing the functions described herein with reference to the systems and/or methods disclosed.

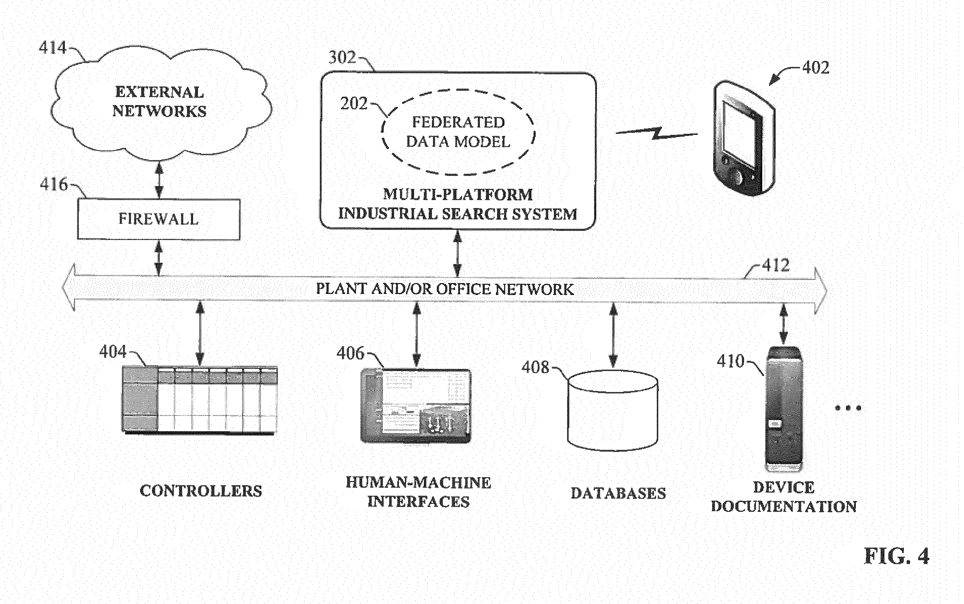

FIG. 4 is a block diagram of a generalized example architecture including a multi-platform industrial search system 302 that discovers and indexes multi-platform data throughout an industrial environment. The example industrial environment depicted in FIG. 4 includes one or more industrial controllers 404, HMIs 406, databases 408 (e.g., data historians, employee databases, inventory databases, etc.), and device documentation repositories 410. The industrial environment may also include other sources of industrial data not depicted in FIG. 4, including but not limited to product inventory tracking systems, work order management systems, asset configuration archives, etc. Data sources 404-410 reside on a plant and/or office network 412. In some scenarios, data sources 404-410 may be distributed across multiple networks within the plant facility; e.g., a plant network and an office network communicatively connected through a firewall device or other network infrastructure device. Network 412 may also have access to external networks 414 such as the Internet (e.g., via firewall 416).

Multi-platform industrial search system 302 - which also resides on network 412 in this scenario - discovers and indexes data items that are available in the disparate data sources 404-410 as well as on the external networks 414. The system also indexes relationships between the data items. This can include, for example, recording instances of the same data item residing in multiple data sources (e.g., recording that a data tag corresponding to a particular temperature measurement within one of the industrial controllers 404 corresponds to a data tag within one of the HMIs 406 for displaying the temperature measurement on a display screen), observing that values of certain data items are a function of other data items (e.g., an output coil associated with a first data tag in a ladder logic program is set based on a value of a second data tag used as an output condition for the rung), or other such relationships. In this way, the multi-platform industrial search system 302 automatically inventories a customer's industrial environment by discovering the industrial assets in use and their associated available data items.

Search system can also discover relevant data on data sources residing on the external networks 414, including but not limited to device or machine vendor documentation, relevant online knowledgebase articles, vendor product release information, etc. In one or more embodiments, the search system can off-load supplemental search operations to one or more external search engines by sending the search criteria to those external engines. The external search engines can then perform asynchronous searches of their respective data sources based on the submitted criteria, and return the results to the search system 302 for integration with the local search results. This distributed search mechanism can permit multiple web-based data sources to be included in the final results presented to the user.

The search system 302 records the indexed information (that is, the discovered plant-wide data items and their relationships) as a federated data model 202, which can be remotely accessed and searched by a client device 402 to locate desired data items. Client device 402 can be any mobile device (e.g., mobile phone, laptop computer, tablet computer, wearable computer, etc.) or fixed location computer (e.g., desktop computer, server, operator interface, etc.) capable of remotely accessing search system 302. In some embodiments, multi-platform industrial search system 302 may be implemented on a web server, allowing client device 402 to access the federated data model via an Internet connection. The search system 302 may also be implemented on a networked local server accessible by the client device 402 via a wireless network connection. In yet another scenario, the search system 302 may be implemented on a cloud platform, where the search system executes as a cloud-based service.

In an example scenario, client device 402 may submit a search query for a particular data item (e.g., a data tag name) to the search system 302, which initiates a search of the federated data model 202 to facilitate location of the specified data item. The search system 302 then returns search result information to the client device 402 identifying all discovered locations of the data item across the various data sources 404-410. The search system 302 can present the search result information as multiple categorized graphical views, either simultaneously as a layered map presentation or as a scrollable set of views that can be viewed individually. For example, the presentation may include a controller view that presents a graphical representation of the industrial controllers (e.g., programmable logic controllers (PLCs) or other types of controllers) that contain programming (e.g., ladder logic, sequential function chart, etc.) that references a desired data item being searched, as well as the machines and/or devices that interface with these controllers. The presentation may also include a physical view that graphically represents the machines that contain or are influenced - either directly or indirectly - by the data item, as well as the locations of those machines within the plant (e.g., the workcell or production area). The system can also, in response to selection of a particular controller on the controller view, display the controller programming running on that controller and automatically navigate to a portion of the controller logic in which the data item of interest is referenced. An alarm view can also be invoked from either the physical view or the controller view by selecting a controller or machine of interest, where the selection causes the system to display a list of active or historical alarms for the selected unit. In some embodiments, the system may filter the alarms such that only those alarms relevant to the data item being searched are rendered. These layers and navigational paths are only intended to be exemplary, and it is to be appreciated that other navigational structures for transitioning between views of a layered map presentation are within the scope of one or more embodiments of this disclosure.

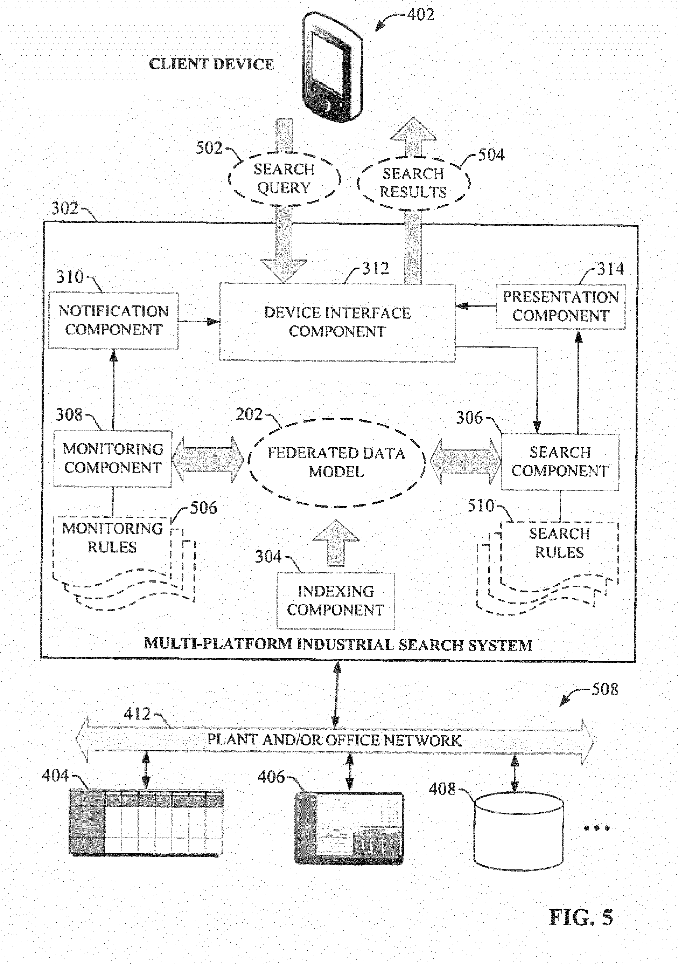

FIG. 5 is a block diagram illustrating components of the multi-platform industrial search system in more detail. In some embodiments, the search system may be implemented on a server or other computing device that resides on plant and/or office network 412. In other embodiments, the search system 302 may be implemented on a web server, allowing client devices to remotely search the federated data model 202 via a web connection. In still other embodiments, the search system may be implemented as a cloud-based service that executes on a cloud platform, as will be discussed in more detail herein.

Multi-platform industrial search system 302 includes an indexing component 304 that collects information about available data items distributed across a customer's industrial environment, and generates a federated data model 202 representing a searchable unified view of the discovered data. The indexing component 304 is configured to discover data items on multiple disparate platforms, including but not limited to industrial controllers 404, HMIs 406, databases 408, electronic documentation libraries, inventory tracking systems, work order management systems, etc. In some embodiments, indexing component 304 can discover available data items by deploying discovery agents on network 412. These agents can traverse network 412 and identify devices in use throughout the plant, as well as the data items or tags, applications, and configuration information associated with those devices. Since a given industrial environment typically comprises a heterogeneous collection of devices of different types and vendors, and the data made available by these devices may comprise many different data types (e.g., controller tags, HMI tags, alarms, notifications, events, etc.), indexing component 304 can manage and deploy device-specific or platform-specific agents configured to extract and analyze information from specific types of devices or data platforms (e.g., controllers, HMIs, etc.). Some device-specific agents can be configured to locate application project files stored on particular device types (e.g., configuration and/or program files on an industrial controller, screen configuration files on an HMI, etc.) or in asset configuration archive databases that are separate from the devices themselves, and extract relevant information about the devices based on analysis of data contained in these project files. By leveraging device-specific and platform-specific agents, the indexing component 304 can discover and index data conforming to many different formats and platforms.

In order to unify this disparate heterogeneous data under a common platform for collective searching, the device-specific agents can transform the collected data to a format understandable by the indexing component 304 (e.g., extensible markup language or other format), and the indexing component 304 can index this transformed data using a common indexing format compatible with the common search platform. The indexing component 304 then encodes this normalized representation of the discovered data in the federated data model 202. By unifying the distributed data under this unified search platform, the system can allow client devices to search the plant-wide data without knowledge of the rules or protocols for reading the various data source platforms (e.g., industrial controllers, HMIs, etc.)

In addition to discovery of devices and their associated data via crawling of the plant network, some embodiments of indexing component 304 can also be configured to receive uploaded configuration information from devices that support self-identification functionality. In such scenarios, industrial devices (e.g., motor drives, industrial controllers, HMI terminals, etc.) that support self-identification to the multi-platform industrial search system can be configured to auto-discover the search system when the device is deployed (e.g., when the device is placed on the plant network). For example, the device may be pre-configured with the identification of the industrial search system to which the device is to provide its identity and configuration information (e.g., a name associated with the search system, a machine identifier, a cloud or web address, etc.), or may be configured to perform a search of the plant network for compatible industrial search systems that may be present on the network. Upon discovery of the search system, the device can then package and send relevant information about the device and its available data to the indexing component 304, which integrates the reported data items in federated data model 202. The information delivered by the device can include, for example, an identity of the device, the device's type and revision, available data items or tags, known contextual information (e.g., the device's location within the plant environment), or other relevant information.

Indexing component 304 can also discover and record relationships - both explicit and inferred - between discovered data items. In some embodiments, the indexing component 304 may record these relationships by tagging discovered data items and building the search index based on these tags, such that related data items share common tags. In some scenarios, these tags may be explicitly defined by a system developer such that the indexing component determines which predefined tags should be applied to newly discovered data items. The indexing component 304 may also auto-generate tags for a given data item based on contextual information, including but not limited to descriptive comments associated with a controller tag, learned interdependencies between a newly discovered data item and a previously discovered data item (e.g., learn that Pump5 is associated with Tank1, and tag Pump5 as being associated with Tank1, or tag both Tank1 and Pump5 according to the larger system in which they operate), or other discovered contextual information. The indexing component 304 can associate similarly tagged data items in the federated data model 202 regardless of the platform in which they were discovered. For example, the indexing component 304 can associate common or related data items discovered, respectively, in an industrial controller, an HMI, and a data historian.

Using some or all of these techniques, the indexing component 304 can automatically build a model of the customer's industrial environment, including the disparate and multi-platform devices in use throughout the plant, their associated available data items, and relationships between these data items. This eliminates the need for plant personnel to have full knowledge of the industrial assets in use throughout the plant, since indexing component 304 can automatically inventory a given industrial environment and record discovered devices and data in federated data model 202.

Once created by the indexing component 304, federated data model 202 can be searched by monitoring component 308 and search component 306. Search component 306 is configured to search federated data model 202 in response to a search query 502 submitted by a client device 402. Client device 402 can exchange data with the multi-platform industrial search system 302 via device interface component 312, which may comprise a wired or wireless network interface, a near-field communication interface, or other such device interface suitable for the particular platform on which the search system is implemented. Client device 402 may be located on-premise and access the device interface component 312 via a local wired or wireless connection, or may access the device interface component 312 via an Internet connection. In some scenarios, the client device 402 may use cellular communication to bridge to the Internet, and thereby access the search system. In some embodiments, device interface component 312 may be configured to verify an authorization of the client device 402 to access the search system prior to allowing search queries to be submitted by the client device. The device interface component 312 may authenticate the client device or its owner using password verification, biometric identification, cross-referencing an identifier of the client device with a set of known authorized devices, or other such verification techniques. In some embodiments, the client device 402 may access the search system use a virtual private network connection, which can enable secure communication with the search system.

In some embodiments, the device interface component 312 may be configured to serve an interface display or dashboard to the client device 402 when the client device requests access to the search system 302. The interface display can include interface elements that allow the user of client device 402 to manually enter and submit a search query 502 to the search system 302. For example, the display may allow the user to enter a keyword, term, or phrase as a search criterion. Example search terms may include identifiers of specific devices or machines, names of production areas within the plant, product names or codes, employee names, or other such criteria. Submitted search criteria may encompass complete or partial names, and may include wildcard characters that can be translated by the search system as encompassing any character in a given position within the text string, thereby enabling the user to locate information even if they are not fully aware of the exact name. In addition to manually entered search criteria, some embodiments of the device interface component 312 can be configured to translate barcodes or Quick response (QR) codes affixed to devices or machines. For example, a user may scan or photograph a barcode or QR code attached to a device, machine, or product (e.g., a pin-stamped or laser-etched barcode affixed to a workpiece during the production process) using client device 402, wherein the barcode contains identification information about the associated component. The client device 402 can then submit identification information extracted from the barcode to the device interface component 312 as a search criterion. In yet another example, client device 402 may extract information about an industrial device or its associated process directly from the device via near field communication (NFC) and submit the extracted information to the device interface component 312. This extracted information can include, but is not limited to, a device identifier, device status information read from a status word maintained on the industrial device, alarm data extracted from an alarm register, production statistics stored on one or more data tags, or other such information. In another example scenario, a near-field (e.g., Bluetooth) beacon can be used to extract information for submission to the search system.

Upon receipt of search query 502, device interface component 312 routes the query to search component 306, which searches federated data mode 202 for content relevant to the search query. Search query 502 may comprise, for example a data tag name (e.g., Tank1), a device or machine attribute, a device vendor, a name of a particular area of the industrial environment (e.g., a workcell or production line), a product name or identifier, or other such search criteria. Search component 306 searches the federated data model 202 for the search criteria identified by the search query 502, identifies data items corresponding to the search criteria, and returns a set of search results 504 to the presentation component 314 for formatting prior to delivery to the client device 402. Since the search results 504 may correspond to data items found on multiple disparate platforms throughout the plant environment (e.g., industrial controllers, HMIs, device documentation repositories, etc.), the device interface component 312 can classify the results according to the platforms on which the results were found, location of the results within the plant environment (e.g., production area, workcell, etc.), or other classification criteria.

In some embodiments, search component 306 can customize the search of the federated data model 202 based on one or more defined search rules 510 defined by a system administrator. These rules may define, for example, role-specific search parameters that dictate what types of data may be provided to a given user, or which layers of a layered map presentation may be presented to the user, based on the user's role (e.g., operator, plant engineer, plant manager, billing personnel, etc.).

In addition to processing search queries submitted by a user via a client device, some embodiments of the multi-platform industrial search system can also support automated dynamic searching. In such embodiments, multi-platform industrial search system 302 includes a monitoring component 308 configured to monitor one or more performance or operational metrics of an industrial system to identify issues requiring attention by an operator or maintenance expert. In response to detection of a performance or operational issue, the monitoring component 308 can perform an automated search of federated data model 202 to collect search results relevant to the detected issue. A notification component 310 can then deliver a notification of the detected issue together with the relevant search results to one or more client devices associated with selected plant personnel determined to be best suited to address the issue.

In an example embodiment, monitoring component 308 may monitor selected data items of industrial system 508 according to defined monitoring rules 506. Monitoring rules 506 can define, for example, which data tags of the various data platforms distributed across industrial system 508 are to be monitored, as well as criteria indicative of performance issues that, when determined to be true, will trigger an automated search and personnel notification. The monitoring rules 506 can also define which employees are to be notified in response to each type of detected performance issue. As an example criterion, a monitoring rule may define that, when a temperature value associated with data tag *Tank3Temp* exceeds a defined setpoint value, an automated search for *Tank3Temp* is to be performed on federated data model 202 is to be performed. The monitoring rules may also specify one or more crucial alarm tags that, when determined to be active, require an action to be taken by maintenance personnel. The rule may also define one or more other relevant data tags to be searched in order to provide additional context for the issues. The rule can also define one or more plant employees to whom the search results are to be sent in response to detection of the issue. The rule may specify the employees explicitly (e.g., be defining one or more user identities or user-specific client devices), or may specify a category of employee (e.g., a user role or area of expertise) such that specific plant personnel associated with the defined category can be identified and notified.

When the monitoring component 308 determines - based on monitoring of the defined data items - that a criterion indicative of a performance issue has been satisfied, the monitoring component generates a search query designed to collect information relevant to the detected performance or operational issue, as defined by the monitoring rules 506. This can include, for example, searching federated data model 202 for the one or more data tags or device attributes whose monitored values satisfied the defined criterion. The search may also include querying for related data items determined to be relevant to the detected performance or operational issue, including but not limited to other device statuses, telemetry values, or operator inputs that may have an effect on the data tag or device attribute being searched. These related data items may be explicitly defined by the monitoring rules for each defined performance issue, or may be dynamically identified based on the relationships between the data items defined in the federated data model 202. For example, when monitoring component 308 performs an automated search for *Tank3Temp* in response to detecting an excessive Tank 3 temperature, the system may locate a reference to this data tag on a rung of a controller logic program (a direct reference). The system can then identify other rungs and address within the program that affect the rung on which the *Tank3Temp* reference is found (indirect references). The monitoring component 308 may cycle through the indexed information recorded in the federated data model 202 multiple times in an iterative fashion until all such relationships determined to be relevant to the performance or operational issue are discovered.

When all relevant search results for a detected performance or operational issue have been collected, notification component 310 identifies one or more employees to be notified of the detected issue. The system may identify suitable recipients based on the monitoring rule definitions, as described above. In some embodiments, the system may narrow the list of suitable recipients further based on current context information, including but not limited to each potential recipient's current location or availability. For example, the search system 302 may determine each potential recipient's current location by tracking each user's respective client devices, and deliver notifications only to those users within a defined radius of the affected machine or device. The search system 302 may also interface with a separate availability tracking system that tracks each user's current availability based on work schedules, a current work activity reported by each user, or other such information. The search system can also access a personnel database to determine documented skills of each registered employee, including documented training or familiarity with a given piece of equipment relevant to the search, and select eligible recipients to be notified based on this information.

When all eligible recipients have been identified, the notification component 310 then delivers a notification of the detected issue to all client devices associated with the target recipients, together with the relevant search result links. In this way, the search system immediately alerts maintenance personnel when a system performance issue is detected, and provides relevant contextual information (layered map presentations, links to relevant HMI screens, sections of controller code, device documentation, etc.) that allows the maintenance personnel to immediately begin diagnosing and addressing the problem via their personal client device. Since the search system can launch HMI screens and control logic viewing applications on the user's client device, the system provides a means for maintenance personnel to remotely diagnose the maintenance issue via their client device without being physically present at the affected machine, device, or industrial system.

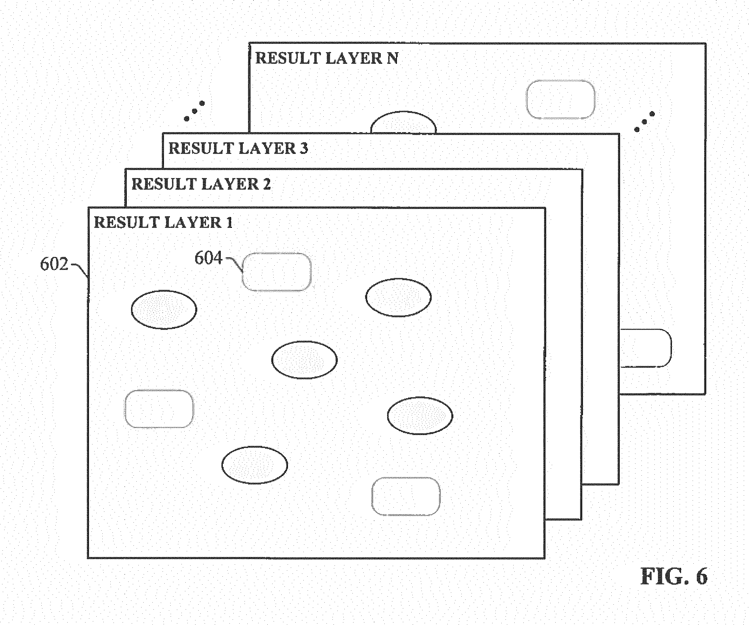

FIG. 6 is a depiction of a layered result presentation according to one or more embodiments. The presentation component 314 can generate multiple different views of the search results returned by search component 306, and present these views as result layers 602 that each render at least a subset of the relevant search results as graphical data elements 604. Based on user selection, the presentation component can display these result layers 602 individually, or can generate a composite view comprising all or a selected subset of the layers 602. In some embodiments, the layers 602 can conform to a hierarchical categorization such that users can navigate through the layers to view the search results at different hierarchical levels.

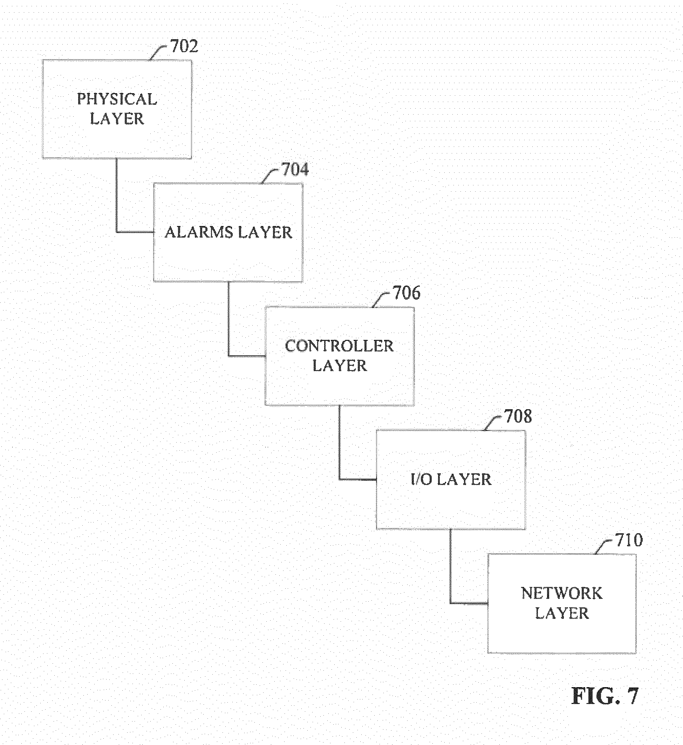

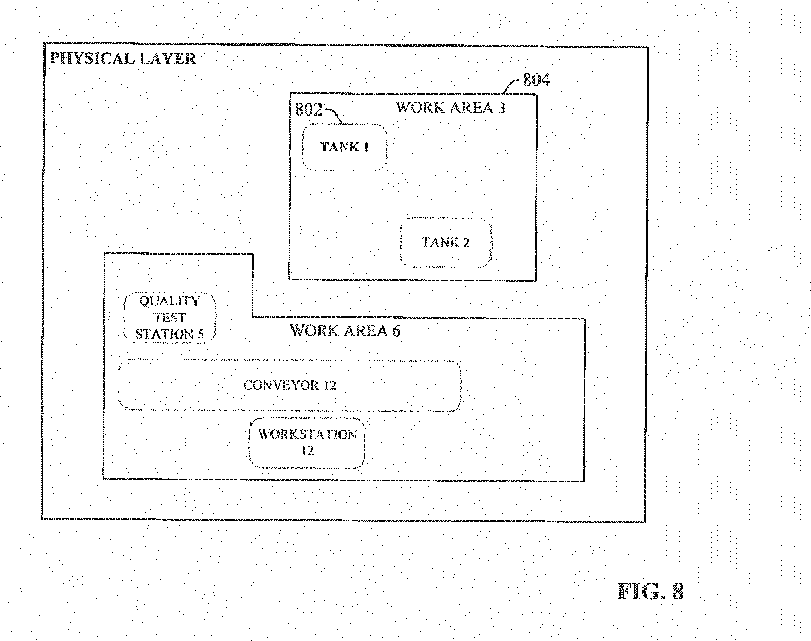

FIG. 7 is a representation of an example, non-limiting hierarchical categorization for presentation of search result layers. This example layer hierarchy comprises a physical layer 702, an alarms layer 704, a controller layer 706, an I/O layer 708, and a network layer 710. The physical layer 702 can identify machines or devices that are relevant to the search criteria specified in the search query, and render these relevant machines in a graphical format that indicates their locations within the plant facility (e.g., according to production area, workcell, etc.). For example, a search for a data tag named *Tank1* may return a physical layer view. FIG. 8 illustrates an example, non-limiting physical layer view for Tank 1 pursuant to this example. The physical view depicts the tank 802 designated as Tank 1 and its location 804 within the plant (Work Area 3), as well as one or more other machines that have a relationship with Tank 1. In this example, Tank 2 is included in the physical view since this tank provides material to Tank 1. The physical view also includes a graphical representation of conveyor 12, which conveys a product that uses material from Tank 1. Graphical representations of Workstation 12, which performs an operation on this product, as well as a quality test station used to perform manual quality checks on the part, are also included on the physical view in this example.

In general, relevant machines or stations to be included in the physical view can be determined by the search component 306 and/or the presentation component 314 based on the search criterion and relationships between the machines defined or inferred from the federated data model. In some embodiments, the search component 306 can also select which machines or units should be included in or omitted from the physical view based on additional contextual data that suggests that certain aspects of the industrial system relating to Tank I should be given particular attention. For example, if an alarm or maintenance condition is currently active for a device or workstation having a relationship with Tank 1, the search system can include the affected device or workstation on the physical view along with Tank 1, and possibly omit other related elements in order to draw attention to this alarm condition.

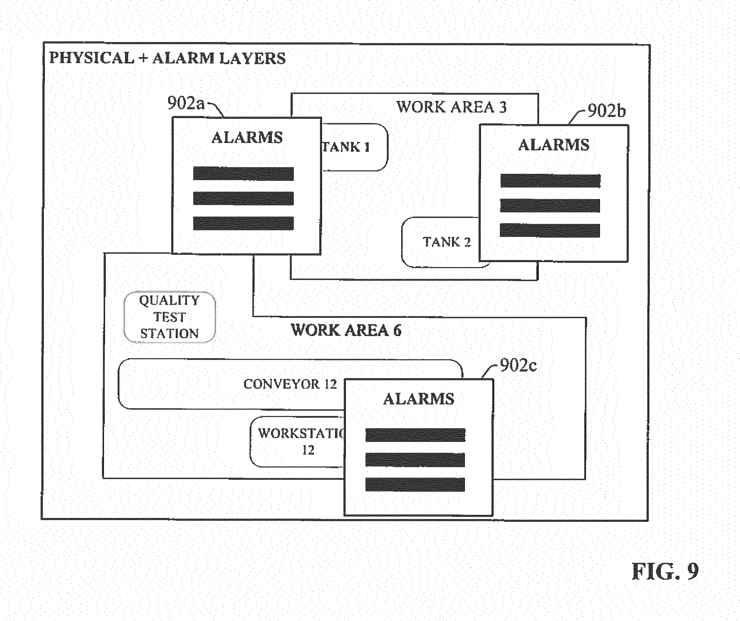

Returning briefly to FIG. 7, the alarms layer 704 can present active or historical alarms associated with any of the machines depicted in the physical layer. FIG. 9 illustrates an example, non-limiting composite view of the search results comprising the physical layer and the alarm layer. In this example view, the presentation component 314 has superimposed alarm windows 902 on or near the relevant machines or stations to present the composite view. However, in some embodiments the presentation component 314 can present these alarms on a dedicated screen in response to selection of a machine from the physical view. In this example, alarm window 902a displays Tank 1 alarms, alarm window 902b displays Tank 2 alarms, and alarm window 902c displays Workstation 12 alarms. As with previous views, the presentation component 314 identifies the current and/or historical alarms for each machine based on live alarm data collected into the federated data model 202 by indexing component 304 and retrieved by search component 306. In this regard, the federated data model 202 associates each machine's alarm information with the relevant machine so that the presentation component 314 can present the alarm data on the relevant portion of the physical view. The system allows the user to activate or deactivate the alarm layer as desired. In some embodiments, the presentation component 314 may automatically activate the alarm layer in the view presented to the user if a potentially relevant alarm condition pertaining to Tank 1 or its related machines is currently active, thereby notifying the user of possibly unknown alarm conditions.

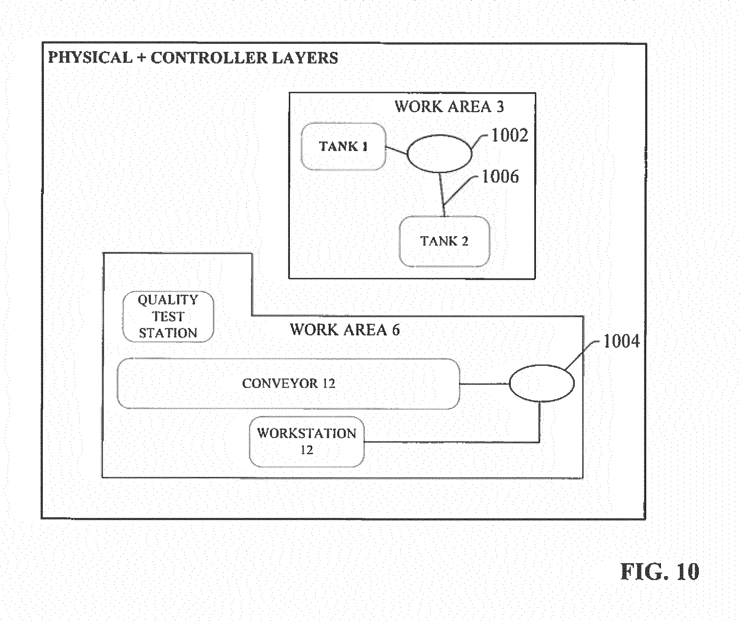

The controller layer 706 can present a graphical depiction of the industrial controllers (e.g., PLCs or other type of industrial controllers) that interface with and make control decisions for the machines rendered in the physical layer, as well as the locations of these controllers within the plant or relative to the machines. FIG. 10 illustrates an example, non-limiting composite view comprising the physical and controller layers for the present example. This view adds two industrial controllers - controller 1002 and 1004- to the physical layer. Controller 1002 performs control decisions for Tanks 1 and 2, while controller 1004 controls Controller 12 and Workstation 12. Connecting lines 1006 between each controller and its associated machines convey which machines are controlled by that controller, by virtue of the hardwired or networked I/O links between the controller and the I/O devices associated with the machines. As with previously described layers, information regarding which controllers are installed throughout the plant environment, and which machines are under control of each controller, is collected and indexed in the federated data model dynamically by the indexing component 304. In some embodiments, selection of one of the controllers 1002 or 1004 will cause the presentation component 314 to launch a control programming window and display the control programming (e.g., ladder logic, sequential function chart, etc.) for the selected controller. Systems for conveying live controller programming on the client device via the search system are described in more detail below.

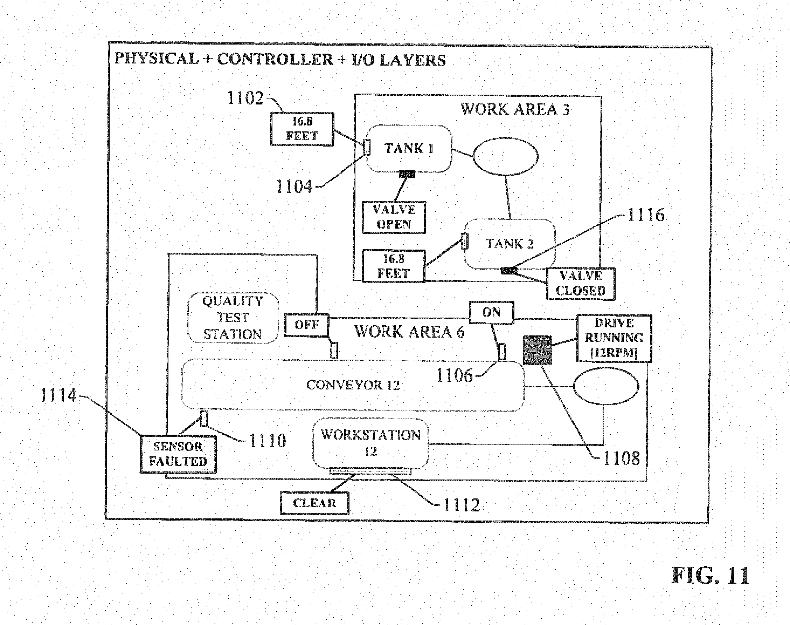

The I/O layer 708 can display I/O devices associated with each machine of the physical layer, as well as associated data. FIG. 11 illustrates an example, non-limiting composite view comprising the physical, controller, and I/O layers. In this example, the I/O layer adds graphical depictions of the level sensors 1104 and valves 1116 for Tanks 1 and 2, a motor drive 1108 that drives Conveyor 12, photo-sensors 1106 mounted to Conveyor 12 to detect presence of parts on the conveyor, and a light curtain 1112 mounted on Workstation 12 to detect when an operator reaches into the workstation to place or remove a part. The presentation component 314 also displays a status box 1102 for each I/O device indicating a current status or value associated with that device. The I/O view can also indicate when a particular I/O device is faulted or is experiencing an error condition (see, e.g., status box 1114).

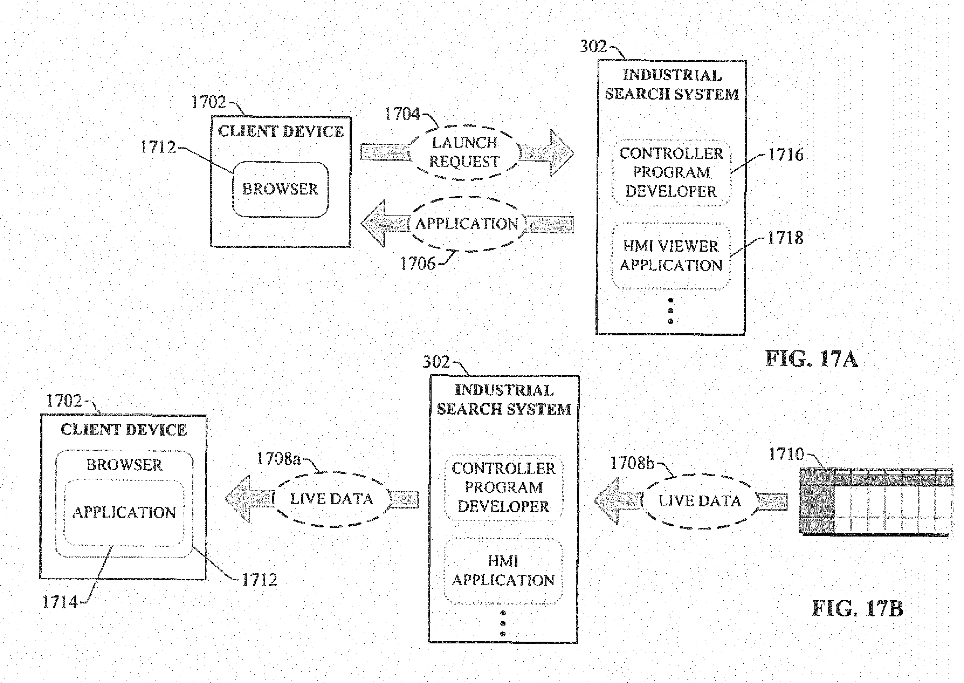

As with previously described layers, the information regarding the I/O devices associated with each machine, as well as their locations relative to the machine, can be indexed in the federated data model 202 by indexing component 304 and leveraged by the presentation component 314 in order to accurately depict the I/O devices associated with each machine. In some embodiments in which live I/O data is continuously retrieved from the industrial controllers and indexed to the federated data model 202, the current status data used to populate the status boxes can also be retrieved from the federated data model 202 by the search component 306. Alternatively, the search system can link the user's client device to each relevant industrial controller and pass live data from the controller's data table to the client device in order to populate the status boxes, as described below in connection with FIGs. 17A and 17B.

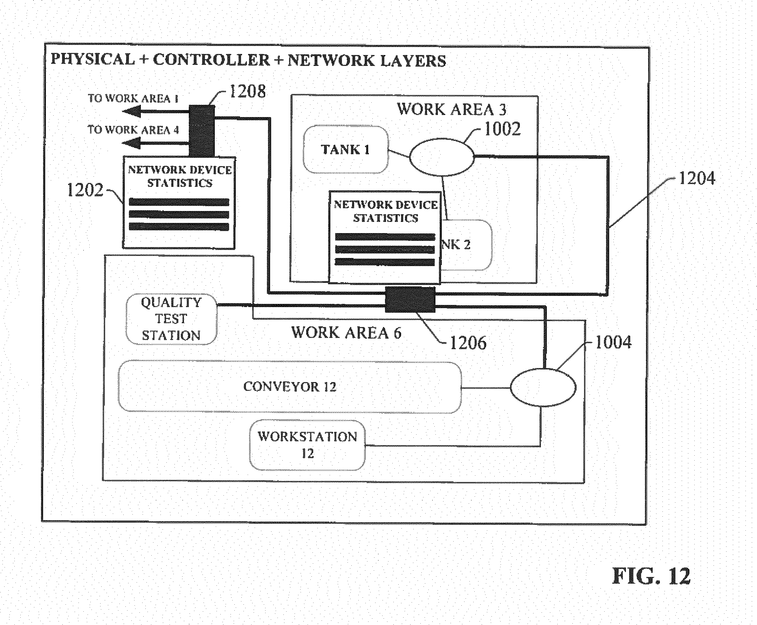

The network layer 710 can display a graphical depiction of network devices and connections making up a network segment for the rendered area of the plant facility. FIG. 12 illustrates an example, non-limiting composite view comprising the physical, controller, and I/O layers. In this example, the network layer adds network infrastructure devices 1206 and 1208 (e.g., routers, hubs, network switches, etc.) and network connection lines 1204 depicting the network paths between the devices on the network segment. Controllers 1002 and 1004 and the quality test station reside on the network segment by virtue of their connection to network infrastructure device 1206. Network infrastructure device 1208 includes network segments that extend to other work areas not depicted in the search result layers for the present search query. In addition to displaying the devices and connections that make up the network segment, the presentation component 314 can also display network device statistics 1202 for each network infrastructure device on the network segment (e.g., network addresses, data throughput, port configurations, error information, etc.). This information can be retrieved from the network infrastructure devices and indexed to the federated data model 202 in association with the network device identifiers by the indexing component 304, or passed through directly from the network infrastructure devices to the user's client device via the search system. The network device statistics 1202 can be enabled or disabled on the presentation as desired.

Any of the layers described herein can support scaling or zooming functions that allow the user to expand or compress the views in order to see more or less detail. In some scenarios, if a particular device or machine is flagged as relevant to the search, fully expanded views may indicate a location of the flagged device or machine using a small generic indicator graphic. When the user zooms closer to the flagged device or machine, a more device- or machine-specific graphic indicator may become visible. In this way, the user can easily locate devices of interest even when zooming, scaling, or scrolling the views.

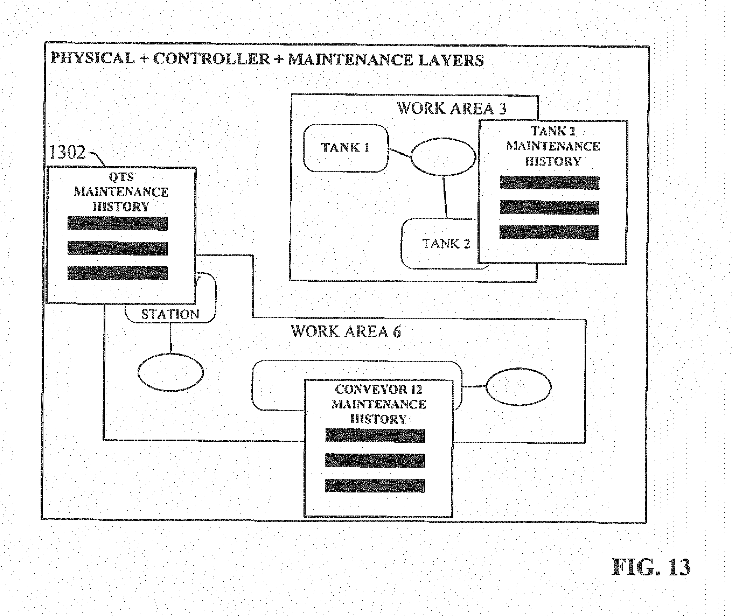

It is to be appreciated the layers depicted in FIG. 7 are only intended to be exemplary, and that other combinations of layered maps are within the scope of one or more embodiments of this disclosure. For example, FIG. 13 depicts a composite view comprising the physical layer, the controller layer, and a maintenance layer. The maintenance layer superimposes maintenance history windows 1302 over respective machines of the physical layer. The maintenance history windows 1302 for each machine displays date-stamped maintenance records for that machine, which may include such information as a date that maintenance was performed, the type of maintenance that was performed, identification of parts or devices that were replaced during the maintenance action, and/or other such information. This maintenance information can be retrieved by the indexing component 304 from a maintenance history database or other source of maintenance information maintained by plant employees and indexed to the federated data model 202 in association with the relevant machines. Subsequently, the search component 306 can retrieve this information from the federated data model 202 for presentation on the maintenance layer in response to a user command to display the maintenance histories of selected machines presented on the physical layer. In some embodiments, the maintenance information presented on the maintenance history windows 1302 may comprise information regarding pending work orders that are currently active for the respective machines (e.g., which may be retrieved from appropriate work order databases by the indexing component 304 for inclusion in the federated data model 202).

In addition to selecting search result information based on the content of the user's search request, some embodiments of the search component 306 or presentation component 314 may filter or prioritize search results presented in each layer based on additional context information. For example, the search component 306 may have awareness of a role associated with the user submitted the query. The system may determine the user's role based on login information submitted to the device interface component 312, identification of a client device from which the query was received, or by other determination means. When the search result information is retrieved by the search component 306, the presentation component 314 may customize the presentation of the search results based on the user role. For example, if search results are being presented to a machine operator, the presentation component 314 can present or make available only those layers that are relevant to machine operation (e.g., the controller and network layers will not be made available to the operator). Moreover, the presentation component 314 can filter alarms presented in the alarm layer so that only alarms relating to machine operation are presented. If the query is being submitted by an engineer or a maintenance person, other layers and alarms relevant to those roles will be made available (e.g., the controller and network views will be made available to those roles). In connection with these role-based presentation features, the search system may include tools that allow a system administrator to define (e.g., as part of the search rules 510) one or more user roles and to associate selected layers, data types, work areas, etc. with one or more of the defined user roles, and the presentation component 314 will enforce these role-specific presentation rules when delivering the layered search result presentations.

The presentation component 314 may also customize presentation of the search results and layers based on current machine or device statuses, such that system components that may require attention are made more prominent to the user. For example, upon retrieval of search results in response to a search query for Tank1, the search component 306 may determine that a photo-sensor that has a direct or indirect influence on Tank 1 operation is faulty (e.g., based on retrieved status information for the photo-sensor). Accordingly, based on this determination, the presentation component 314 may prioritize this information in the search results by enabling the I/O layer in the initial search result presentation provided to the user's client device, and rendering a "sensor faulted" status box for the faulty photo-sensor in a manner that distinguishes this status from the statuses of the other I/O devices (see, e.g., status box 1114 in FIG. 11).

One or more embodiments of the search system can also access off-premise data sources, including but not limited to web-based content (e.g., vendor knowledgebases or technical notes), and present any information from these external sources deemed relevant to a given search on any of the result layers. Moreover, some embodiments of the search component 306 may be configured to correlate local search results (that is, search results located on data sources within the plant facility) with information available on web-based data sources. For example, if a local search result relates to a particular model of industrial device, the search component 306 may search external web-based data sources for additional information about that device (e.g., knowledgebase articles, on-line documentation, technical notes, information regarding the latest firmware revision for the device, etc.). The presentation component 314 can then present links to these external search results on its own layer (e.g., a web documentation layer) or on another layer. For example, if the presentation component 314 displays a faulted motor drive on the I/O or controller layer, the web documentation layer may be added that overlays an interactive link near the motor drive graphic that allows the user to navigate to the on-line documentation for the drive.

The search system may further customize the search result layers based on the current location of the user submitting the request. For example, the search component 306 may also be configured to filter search results and/or layers based on a current location of the client device 402 from which the search query was received. According to such embodiments, upon determining a set of search results in response to a search query, the search system may determine the location of the client device 402 (or the user of client device 402; e.g., using a location tracking badge carried by the user) and present only a subset of the total search results determined to be relevant to the user's present location. For example, if the user is determined to be located near a particular production line or within a particular workcell, the search component 306 may identify the subset of search results corresponding to industrial devices or machines located within that section of the plant facility and present those limited results to the presentation component 314 for delivery to the client device.

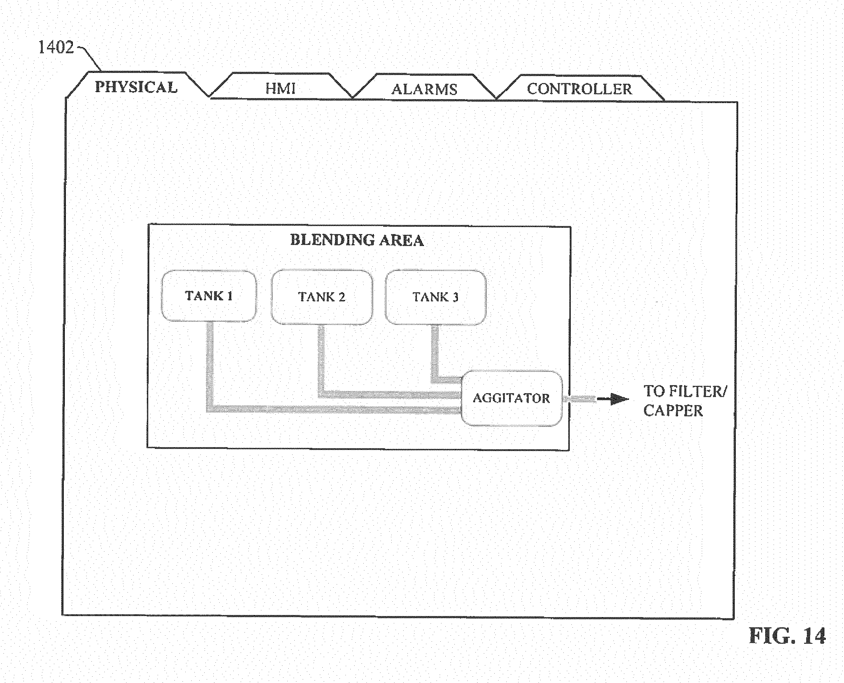

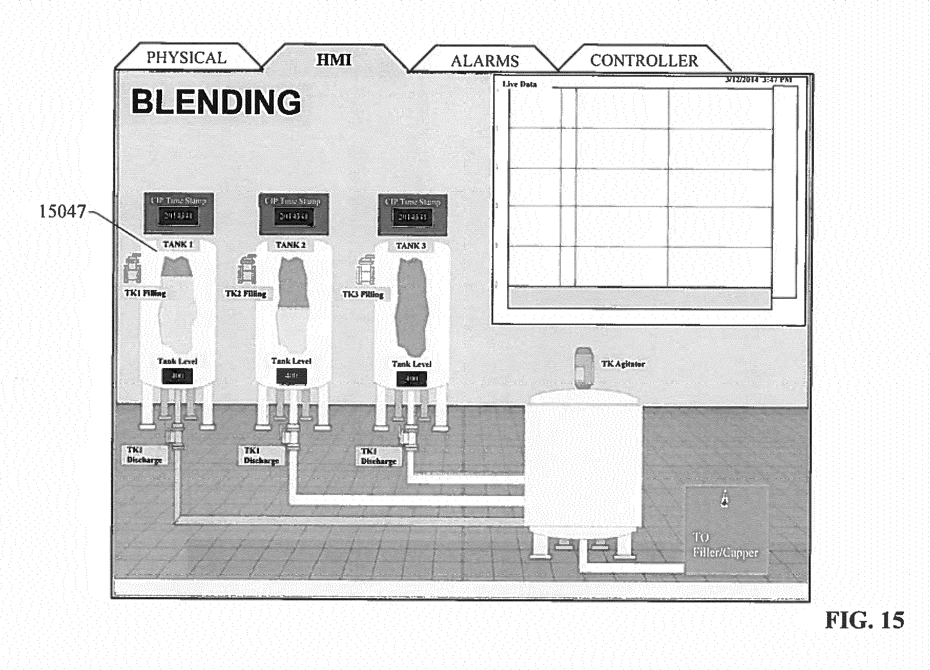

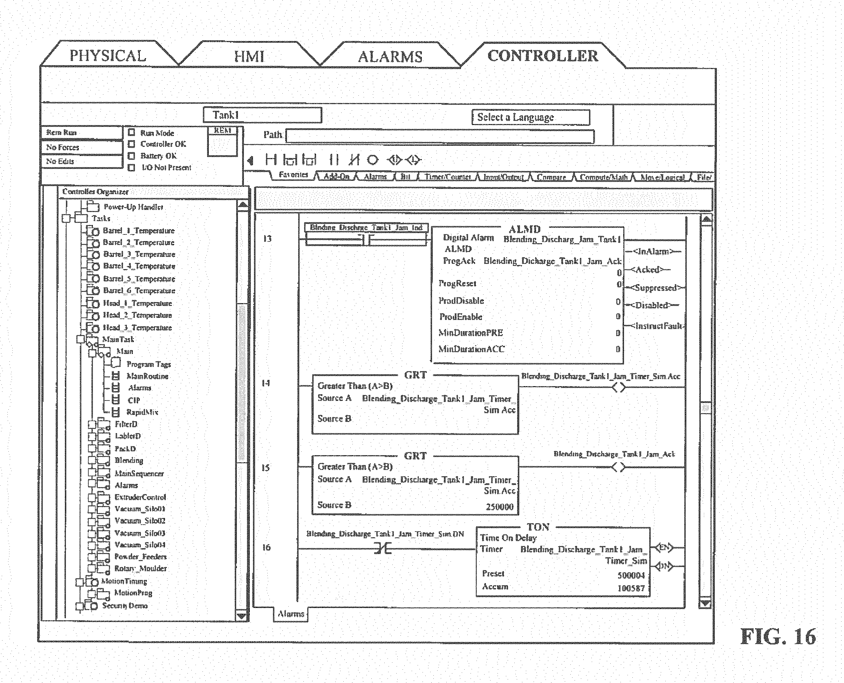

In some embodiments, as an optional or alternative presentation format, the presentation component 314 may deliver the search result layers using a tabbed interface rather than superimposing layers into a composite view. FIG. 14 is an example tabbed interface that can be presented to the client device by presentation component 314. In this example, in response to a search for *Tank1,* the presentation component 314 has generated a search result interface comprising four layers - a physical layer, an HMI layer, an alarms layer, and a controller layer. These layers can be individually viewed by selecting the appropriate layer tab 1402. FIG. 14 illustrates selection of the physical layer, which renders a graphical representation of Tank 1 and its location within the blending area of the plant facility, as well as to related tanks (Tanks 2 and 3) and an agitator that is fed by the three tanks. Selection of the "HMI" tab on this presentation renders an HMI screen for the blending area, as shown in FIG. 15. This HMI screen corresponds to a local HMI installed in the blending area and discovered by the indexing component 304. In this example, the presentation component has automatically navigated to the HMI screen containing the main Tank 1 graphic 1504. The presentation component 314 configures the presentation such that selection of the "HMI" tab from the user's client device launches an instance of the HMI application required to view the HMI screen. Similarly, selection of the "Controller" tab on this tabbed presentation launches a control program viewer on the user's client device and renders the control programming search result for the *Tank1* search query, as shown in FIG. 16. In this example, the controller view renders a ladder logic program that references *Tank1* as a data tag. When the "Controller" tab is selected, the presentation component 314 automatically navigates to the first instance of *Tank1* found in the control program. However, once the control program is displayed, the user can navigate to any desired portion of the control program. In a similar manner, selection of the "Alarms" tab presents a list of active or historical alarms relating to Tank 1. In some embodiments, selection of the "Controller" tab may cause the resulting logic display to navigate to a portion of the control program selected based on a current state or context of the control program. For example, if an alarm is active for Tank 1 or a related device, the logic screen may automatically navigate to the portion of the control logic that defines the conditions for triggering the alarm conditions, so that the user can identify the set of conditions that define the alarm state.

For scenarios in which a physical view includes machines that are controlled by different industrial controllers or that reside on different networks, the presentation component 314 can allow the user to select a particular machine on the physical view under the "Physical" tab prior to navigation to another tab. With a particular machine selected, navigation to a different tab layer will render the related view for the selected machine. For example, if the user selects the Tank 1 graphic in the physical view and then navigates to the "Controller" tab, the control programming for Tank 1 will be displayed.

Interaction with certain display elements of the search result layers described above can cause the multi-platform industrial search system to render views requiring a separate application to be launched on the user's client device. For example, in some embodiments, if the indexing component 304 has discovered and indexed an HMI application installed near a given machine for viewing status and operational data associated with that machine, the presentation component 314 can configure the physical layer such that selection of a graphical representation of that machine causes an HMI application to be launched on the user's client device, and the particular HMI screen relating to the machine to be displayed. Similarly, if the indexing component 304 had discovered an industrial controller executing an industrial control program that controls one or more machines, the presentation component 314 can configure the physical and/or controller layers such that selection of a graphic representing the controller or one of the controlled machines causes a control program viewing or development application to be launched on the user's client device, and the control logic to be rendered on the application. In the tabbed presentation, selection of the "HMI" or "Controller" tabs cause similar operations (see FIGs. 15 and 16).

For scenarios in which the user's client device does not have the applications necessary to view the HMI or control logic screens installed locally, the multi-platform industrial search system can provide other means for viewing a selected search result. For example, the system may launch the necessary application on a workstation and provide an interactive remote view of the application. Alternatively, the system may launch the application on a different workstation, on which the user can view the content.

FIGs. 17A and 17B are block diagrams illustrating remote launching of an application on a client device according to one or more embodiments. In this example, industrial search system 302 is implemented on a hardware platform (e.g., a web server, a stand-alone appliance, etc.) on which a number of industrial applications are installed. These applications can include, but are not limited to, a controller program development application 1716 (e.g., ladder logic editing software) and an HMI viewer application 1718. When the industrial search system 302 delivers a set of search results to client device 1702 via the layered map presentations described above, the user may opt to view an HMI screen or industrial controller program by interacting with the appropriate graphical elements of the layered map (e.g., selection of a machine or controller graphic, selection of an "HMI" or "Controller" tab, etc.), causing the client device 1702 to send a launch request 1704 to the search system 302. Depending on the application platform being requested (e.g., controller logic reference, visualization screen, etc.), the search system 302 can remotely launch, on client device 1702, an instance of the particular application 1706 needed to view the selected screen or program.

For example, if the user requests an HMI screen associated with a selected machine via appropriate interaction with the layered map, the application launching component 316 of search system 302 will remotely launch an instance of HMI viewer application 1718 on client device 1702, load the HMI application containing the HMI screen corresponding to the selected result, and navigate to the screen containing the reference of interest. In some embodiments, the search system 302 can serve a web-compatible version of the HMI viewer application on a browser application 1712 running on client device 1702. Similarly, if the user elects to view a control program executing on an industrial controller by selecting the appropriate controller graphic on the controller layer, the application launching component 316 can remotely launch an instance of the controller program development application 1716 on client device 1702. In some embodiments, the search system 302 can instantiate the controller program developer application as a remote node that allows the user to modify the controller programming remotely from client device 1702.

Once the appropriate application has been launched on client device 1702, the search system 302 can place the application 1714 on line with the necessary data source for populating the client-side application with live data 1708. For example, search system 302 can initiate a communication link to industrial controller 1710 and retrieve live data 1708 from the data tags needed to populate application 1714 (e.g., to display live data or drive graphic animation on an HMI screen, to provide a runtime view of controller logic, etc.). Other data sources can include, but are not limited to, motor drives (e.g., VFDs), cameras (e.g., vision cameras, 2D barcode readers, etc.), instrumentation and telemetry devices, or other such data sources. The presentation component 314 can use similar communication links to live plant floor data in order to drive near real-time data presentations on one or more of the layer maps (e.g., the alarm information on the alarm layer, I/O status information on the I/O layer, etc.).

Although FIGs. 17A and 17B depict applications 1716 and 1718 as residing on the same server as industrial search system 302, the applications 1716 and 1718 may reside on a different server or device (e.g., an application server, an electronic operator interface device, etc.) in some implementations. In such scenarios, the industrial search system 302 will respond to the launch request 1704 by accessing the application server and instructing the server to remotely launch the appropriate application on the client device 1702, either via direct communication with the client device 1702 or using the industrial search system server as a pass-through. In some embodiments, the search system 302 (or separate application server) can deliver the application to the client device as interactive web pages (e.g., HTML pages) that facilitate remote viewing and modification of data on the target data source via interaction with the web pages (e.g., the industrial controller, the HMI terminal, etc.). In other embodiments, the search system 302 can deliver the application by initiating a remote desktop on the client device and launching the application within the remote desktop environment.

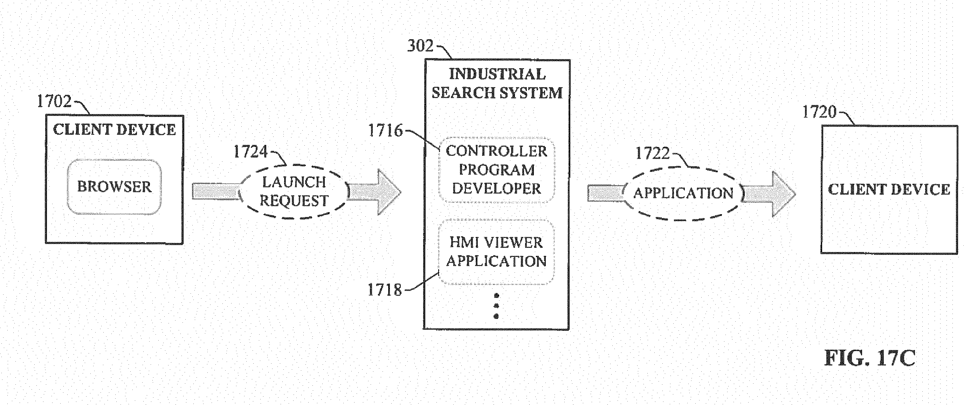

In some embodiments, the search system 302 may deliver the application to a different client device or computer (e.g., a desktop computer, a laptop computer, a workstation, etc.) other than that which initiated the launch request. FIG. 17C is a block diagram that illustrates launching of an application 1722 on a different client device 1720. This implementation may be useful if client device 1702 is a small mobile device that is not conducive to optimal interaction with the particular application being launched. In such scenarios, the search system 302 may be pre-configured to associate certain types of applications (e.g., HMI application, controller logic application, etc.) with specific identified client devices, such that a command to launch a particular type of application causes the industrial search system to, in response to receipt of launch request 1724, launch the application 1722 on the client device 1720 designated for that application. In some embodiments, the selection of the target device may be a function of both the application type and the user or user role from which the launch request was received. The search system 302 can then send a notification to client device 1702 indicating that the results can be viewed on client device 1720.

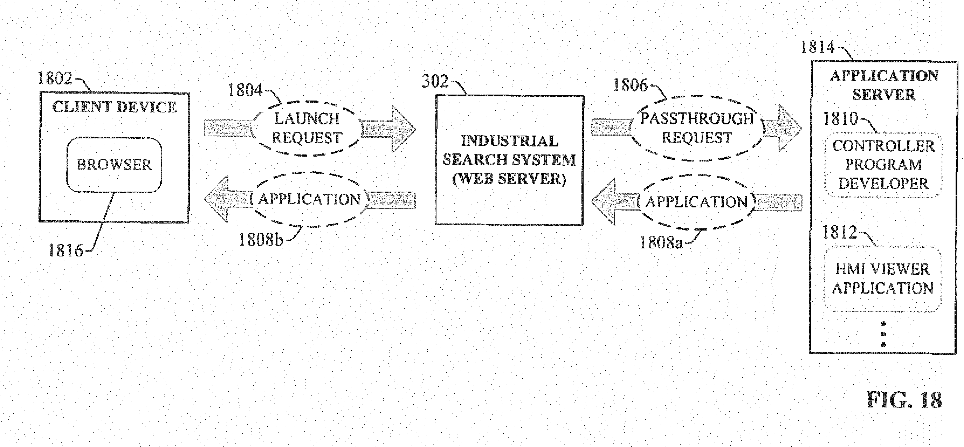

FIG. 18 is a block diagram illustrating another architecture for remotely launching an industrial application. In this example, industrial search system 302 is implemented on a web server, and a separate application server 1814 hosts the industrial applications to be launched remotely (e.g., controller program developer 1810, HMI application 1812, drive software, camera or instrument software, etc.). When client device 1802 sends a launch request 1804 to the search system 302 (e.g., via browser application 1316), the web server running search system 302 sends a passthrough request 1806 to application server 1814 requesting the indicated application. In response to receiving the passthrough request 1806, application server 1814 sends the selected application 1808 to the client device 1802, which launches the application in browser application 1816. The application server 1814 may send the application 1808 directly to the client device 1802, or may send the application 1808 to search system 302, which passes the application through to client device 1802.

Although FIG. 18 depicts only a single application server, some implementations may comprise multiple servers hosting their own dedicated content. For example, a given facility may include multiple dedicated HMI devices that each host their own visualization content (e.g., display screens, animations, system data, etc.). When a user selects a search result corresponding to content on one of the HMI devices, the search system 302 will redirect the corresponding launch request to the appropriate HMI host.

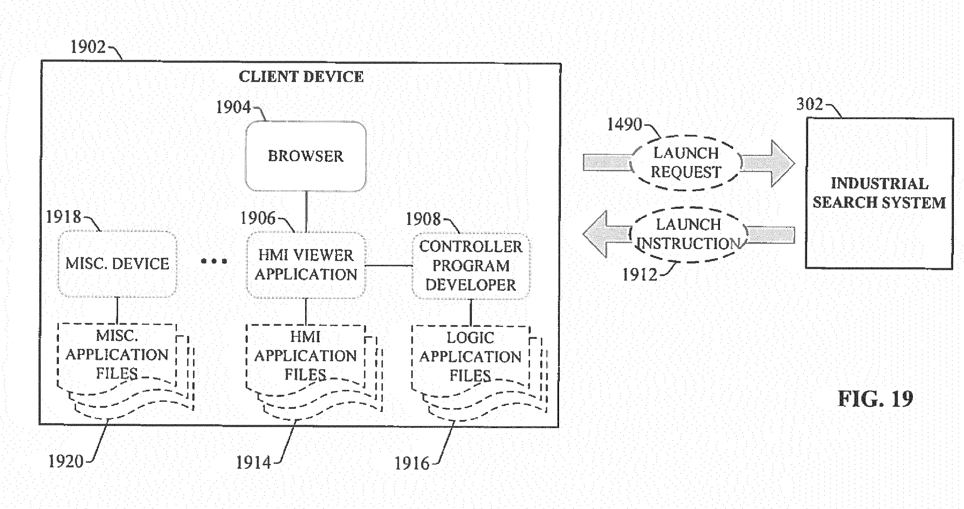

FIG. 19 is a block diagram illustrating another implementation for remotely launching an industrial application. In this example, client device 1902 is pre-installed with HMI viewer application 1906 and controller program developer 1908. Client device 1902 also stores application files for the HMI viewer application 1906 and controller program developer 1908 (other miscellaneous types of applications 1918 and associated application files 1920 may also be stored on client device 1902, including but not limited to camera viewing and configuration software, motor drive configuration software, instrumentation software, etc.). HMI application files 1914 may comprise, for example, different HMI applications corresponding to different industrial systems, machines, work areas, etc. Each HMI application file 1914 contains the display screen definitions, graphical layout definitions, animation configurations, etc. for a particular HMI application. Each HMI application file can be loaded on HMI viewer application 1906 locally at the client device 1902 to facilitate viewing the defined displays screens. Logic application files 1916 correspond to controller programs that have been downloaded to respective industrial controllers throughout the plant. Each logic application file can be loaded on controller program developer 1908 to facilitate viewing and editing of the loaded controller program.

In this example, the industrial search system 302 is configured to remotely launch a selected application file within its appropriate viewing context. For example, after industrial search system 302 has delivered a layered map presentation comprising a set of search results to the browser application 1904 of client device 1902, the user may interact with the layered map to request a view of an HMI application or controller program associated with a machine or controller, causing a launch request 1910 to be sent to search system 302. In response to receiving the launch request 1910, industrial search system 302 sends a launch instruction 1912 to the client device 1902 instructing the device which application (HMI viewer application 1906 or controller program developer 1908) to launch, as well as which application file should be loaded to facilitate viewing the selected search result. The launch instruction 1912 can also cause the selected application to navigate to the appropriate HMI screen or logic rung corresponding to the selected search result. Using this architecture, industrial applications are installed locally on each user's client device, and run remotely by the industrial search system 302.

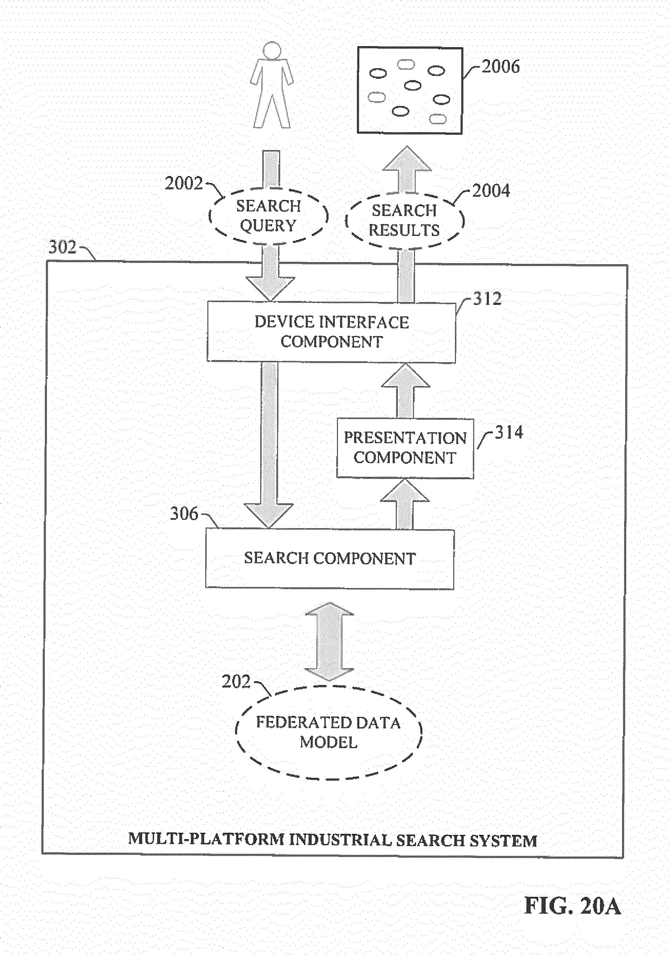

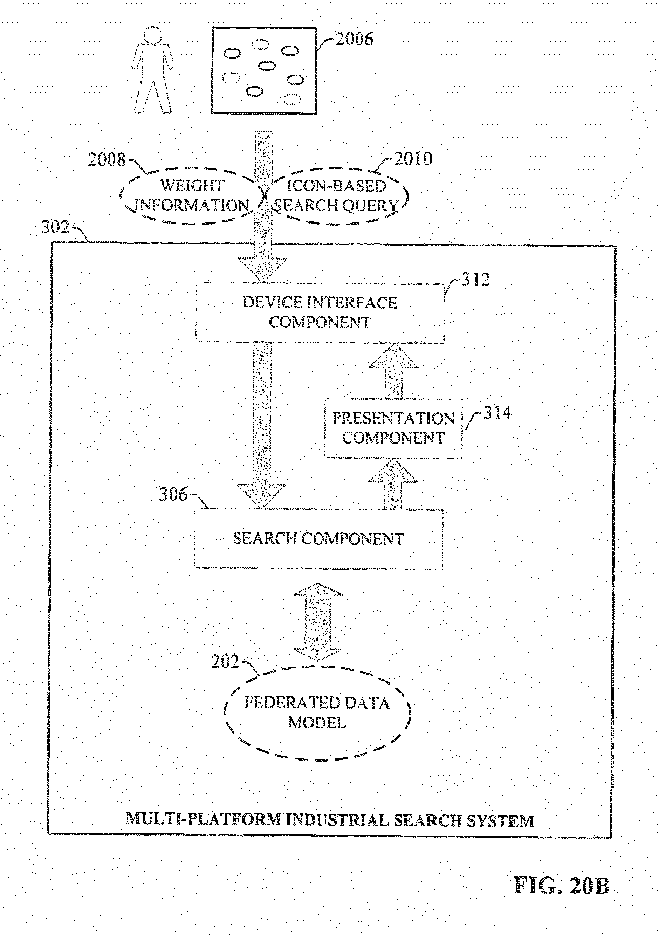

In some embodiments, the layered map presentation generated by the presentation component 314 can be configured to process various types of feedback information provided by the user via interaction with the graphical elements presented on the layers. FIGs. 20A and 20B are diagrams illustrating provision of feedback information to the search system through interaction with the layered maps. As described in previous examples, a user may submit a search query 2002 to the search system 302 via device interface component 312 using a suitable client device. The search component 306 retrieves a selected set of multi-platform search results based on the collected and inferred information maintained in the federated data model 202, and presentation component 314 delivers these search results 2004 as a layered map presentation 2006 to the user's client device as described above.

In addition to the interactions described above in previous examples, the user can interact with the layered map presentation 2006 to provide other types of feedback information to the system, including but not limited to weight information 2008 or additional icon-based search queries 2010, as shown in FIG. 20B. For example, upon review of the search results presented in the layered map presentation 2006, the user may determine that certain results are more relevant or useful than others given the current search context or goals. Accordingly, the user can interact with graphical elements representing the relevant search results (e.g., machine graphics, I/O device graphics, relevant alarms, an active work order, etc.) to flag the results corresponding to those elements as being useful to the current search context. Based on these selections, the layered map returns weight information 2008 to the search system 302, which creates an association between the original search query 2002 and the search results flagged by the user. The search system 302 records these weights and associations in the federated data model 202. Subsequently, if another search query containing similar search criteria is submitted to the search component 306, either by the same client device or from another client device associated with a different user, the search results returned by the system will prioritize the previously flagged results, and the presentation component 314 will display these flagged results in a manner more likely to draw the user's attention to those items; e.g., by automatically enabling the layers on which the prioritized results appear, by displaying a priority marker on or near the results, by graphically highlighting the selected result, etc. In some embodiments, the search system can also track user interactions with search results provided in response to a query (e.g., selections of search results), and record these interactions in the federated data model for use by the search system to provide more relevant results in response to subsequent searches.

In a related aspect, the search system 302 may prioritize search results using inference as well as explicit priority definitions provided by the user. For example, the search system 302 may apply a higher priority to certain search results based on such factors as a number of submitted requests for those results, a number of instances of a given search result found across the industrial environment (e.g., a number of HMI screens on which a result appears, a number of ladder logic rungs on which a particular data tag is referenced in control logic, etc.), or other such criteria.

In some embodiments, in connection with marking the prioritized search results, the search system can allow the user to enter tag information and associate this information with selected results for viewing by other uses. For example, via interaction with the layered map, the user may flag a particular I/O device as a prioritized result, and enter tag information to be associated with the I/O device and displayed to other users of the system. This tag information can include, but is not limited to, an identifier of the user who applied the tag, a note from the user to be displayed when the I/O device is viewed by other users (e.g., a maintenance note), or other such information. In this way, the system provides a means for maintenance personnel addressing a given issue to convey information to one another through the use of virtual tags that can be stored to the federated data model and viewed by all users having access to the search system.

Some embodiments may also support icon-based searching, whereby subsequent search queries can be submitted to the search system 302 through selection of a graphical element on the layered map presentation. For example, upon receipt of the layered map presentation 2006 in response to a first search query, the user may select a graphical element relating to a particular machine, I/O device, work order, alarm, etc. for submission to the system as an icon-based search query 2010. The icon-based search query 2010 causes a search for the selected machine or device to be performed by search component 306, resulting in an updated layered map presentation that modifies the search results based on the new search criterion. The presentation component 314 can rank, prioritize, or filter the search results of this subsequent icon-based search based on the previously submitted search query that invoked the original layered map presentation 3006, which serves as context information for the icon-based search. For example, the presentation component 314 may prioritize results of this subsequent search that are common to both the original query and the subsequent icon-based search.

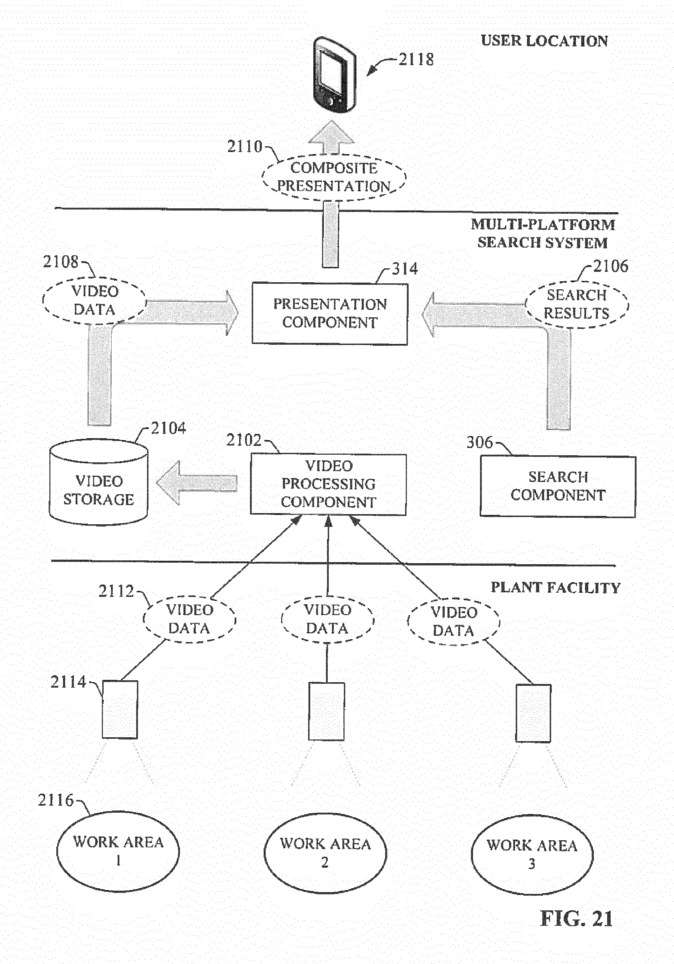

Some embodiments of the multi-platform industrial search system can also support integration of live or pre-recorded video information into the layered map presentations. FIG. 21 is a diagram illustrating an example configuration for incorporating video information into the search result presentations generated by the search system. In this example, a number of video capture devices 2114 (e.g., digital video cameras or other types of video capture devices) are installed at various locations throughout the plant facility to capture video of respective work areas 2116. The video capture devices 2114 are installed on a network having access to the hardware or cloud-based platform on which the search system is implemented. Each video capture device 2114 pushes video data 2112 to the search system as individual video streams. A video processing component 2102 associated with the search system can process and store each video stream on video storage 2104, such that the video data from each camera is tagged with identification information indicating the plant facility and work area recorded by the video data.

As described in previous examples, the search component 306 can provide search results 2106 to the presentation component 314 in response to a search query submitted by the user via client device 2118. In this example, the layered map presentation provided to the user includes interactive controls that allow the user to add live or historical video data 2108 to the presentation if such video information is available for a given work area, yielding a composite presentation 2110 that overlays video data over the relevant portions of the layered presentation.

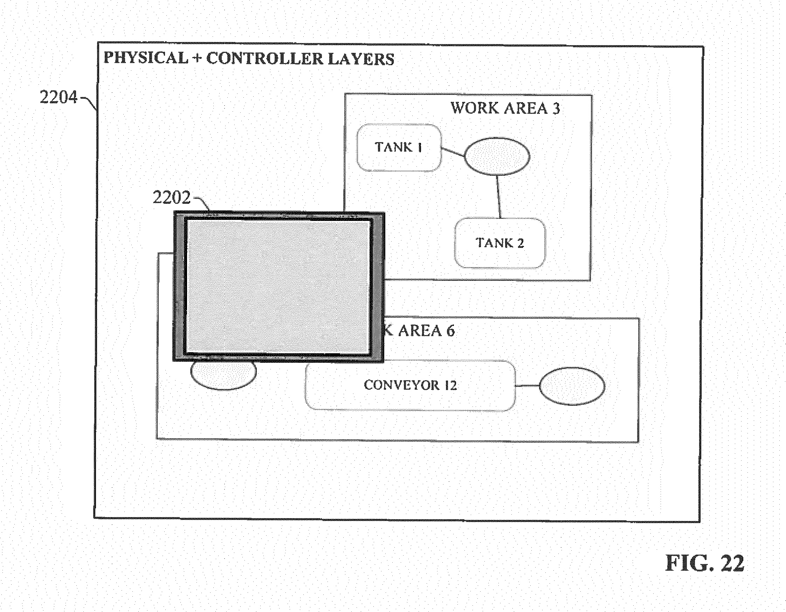

FIG. 22 illustrates an example layered presentation 2204 that includes a video window 2202 for streaming video information for work area 6. In this example, the graphical representation of Work Area 6 may include a control indicating that video is available for that area. Selection of this control causes the presentation component 314 to overlay video window 2202 on or near the Work Area 6 graphic. If the user selects a live video stream the presentation component 314 will begin streaming the most recent video information for Work Area 6 from video storage 2104 to the client device. In some embodiments, the user may also invoke a historical data stream by entering a day and time of interest via the layered map presentation 2204. In response, the presentation component 314 will retrieve the video data corresponding to the entered day and time, and stream this video information to the client device. Using this configuration, the user can invoke live or historical visual information for areas of interest via the search system. For example, if the layered map presentation indicates that an alarm condition is active for a particular machine or device, the user may invoke live or historical video in order to visually inspect the remotely via a mobile device.

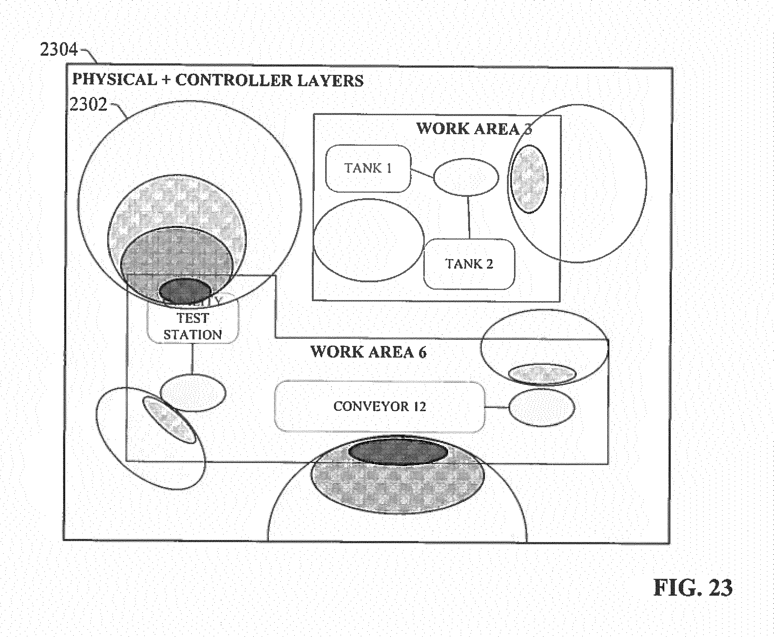

One or more embodiments of the multi-platform search system can also depict employee or operator information on the layered map presentation. For example, some embodiments of the presentation component 314 can generate an employee congregation view that graphically depicts current or historical locations of employees throughout the plant facility. The presentation component 314 may present this information as heat map data overlaid on the layered map presentation. FIG. 23 illustrates an example layered map presentation 2304 on which heat map information representing employee locations is superimposed. In this example, each heat map graphic 2302 represents an employee density, where darker areas represent higher employee densities. The heat maps may represent a current employee density based on current employee location information collected by the search system, or accumulated historical employee densities representing employee density trends. This employee density view can convey where employees spend the most time throughout the day, which can also suggest which areas of the plant are consuming the most man-hours for maintenance. The employee location information used to drive the heat map presentations can be collected by the search system using any suitable location tracking means. For example, employees may be provided with location tracking badges or other devices that are tracked by the indexing component 304, allowing the system to continuously record the employee locations in the federated data model 202. Alternatively, the users' mobile devices can be configured to provide location information to the indexing and search system, which records this information for use by the presentation component 314.

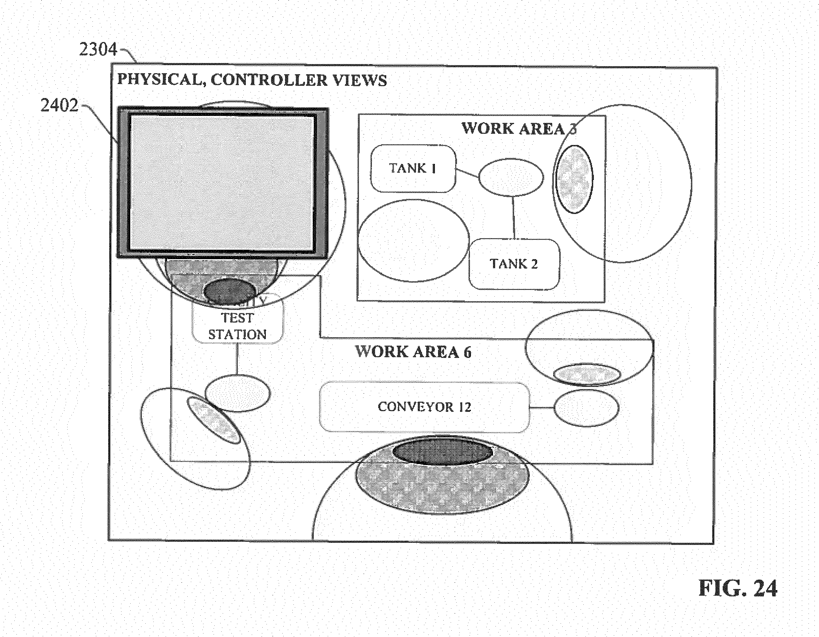

For embodiments that support delivery of video information, the user may also choose to invoke live video of an area at which a large number of employees are currently congregated, as shown in FIG. 24. In this example, the user has invoked a video window 2402 in order to view employee activity at the quality test station of Work Area 6.

The heat map presentations depicted in FIGs. 23 and 24 can also be used to convey other types of information. For example, in some embodiments the presentation component 314 may allow the user to invoke an alarm density view that depicts alarm frequencies throughout the plant as heat map information, where darker areas represent machines or devices that experience higher frequencies of alarms or downtime instances. These views can assist with planning maintenance activity by conveying which assets should be given higher maintenance priorities. In order to construct these alarm frequency heat maps, the indexing component 304 can apply geo-tags to incoming alarm information prior to indexing the alarm information in the federated data model 202, where the geo-tags indicate the location at which the alarm was generated. In a related aspect, the search component 306 or the monitoring component 308 can correlate alarm frequency and location with particular times, shifts, or operators based on analysis of the federated data model 202, and generate notifications or report information identifying these correlations.

The multi-platform search system can support individual user profiles that allow each user to set and store individual preferences for interacting with the system. For example, the system can allow a user to curate personal views of the system by setting default viewing preferences. These preferences can include identifying specific layers to be included or omitted each time a set of search results is presented, tagging specific machines, devices, work areas, or other aspects of the industrial system for prioritization in connection with delivering search results, or other such individual preferences.

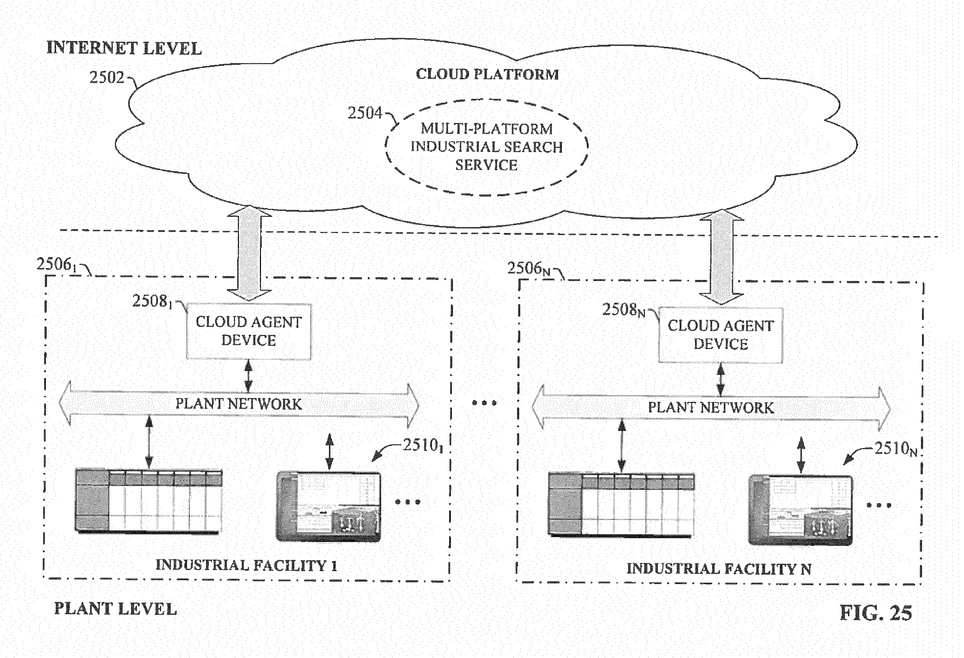

As noted above, one or more embodiments of the multi-platform industrial search system can be implemented on a cloud platform. FIG. 25 is a conceptual diagram of a generalized cloud-based implementation for the industrial search system described herein. In this implementation, the multi-platform industrial search system executes as a cloud-based service 2504 on cloud platform 2502, allowing industrial data from multiple geographically diverse industrial facilities (e.g., industrial facilities 2506₁-2506_{N}) to be indexed under a common federated data model for collective searching. This cloud-based implementation also allows a user to access the industrial search service 2504 from substantially any location.

According to one or more embodiments, on-premise cloud agent devices 2508 can collect data from industrial devices 2510 - or from other data sources, including but not limited to data historians, business-level systems, etc. and make this data available to the indexing component 304 of search service 2504, which incorporates the collected data into federated data model 202 on the cloud platform 2502. Cloud platform 2502 can be any infrastructure that allows industrial search service 2504 to be accessed and utilized by cloud-capable devices. Cloud platform 2502 can be a public cloud accessible via the Internet by devices having Internet connectivity and appropriate authorizations to utilize the industrial search service 2504. In some scenarios, cloud platform 2502 can be provided by a cloud provider as a platform-as-a-service (PaaS), and the industrial search service 2504 can reside and execute on the cloud platform 2502 as a cloud-based service. In some such configurations, access to the cloud platform 2502 and the industrial search service 2504 can be provided to customers as a subscription service by an owner of the industrial search service 2504. Alternatively, cloud platform 2502 can be a private or semi-private cloud operated internally by the enterprise, or a shared or corporate cloud environment. An example private cloud can comprise a set of servers hosting the industrial search service 2504 and residing on a corporate network protected by a firewall.

If cloud platform 2502 is a web-based cloud, cloud agent devices 2508 at the respective industrial facilities 2506 may interact with industrial search service 2504 directly or via the Internet. In an example configuration, the industrial devices 2510 connect to the on-premise cloud agent devices 2508 through a physical or wireless local area network or radio link. In another example configuration, the industrial devices 2510 may access the cloud platform 2502 directly using integrated cloud agents.

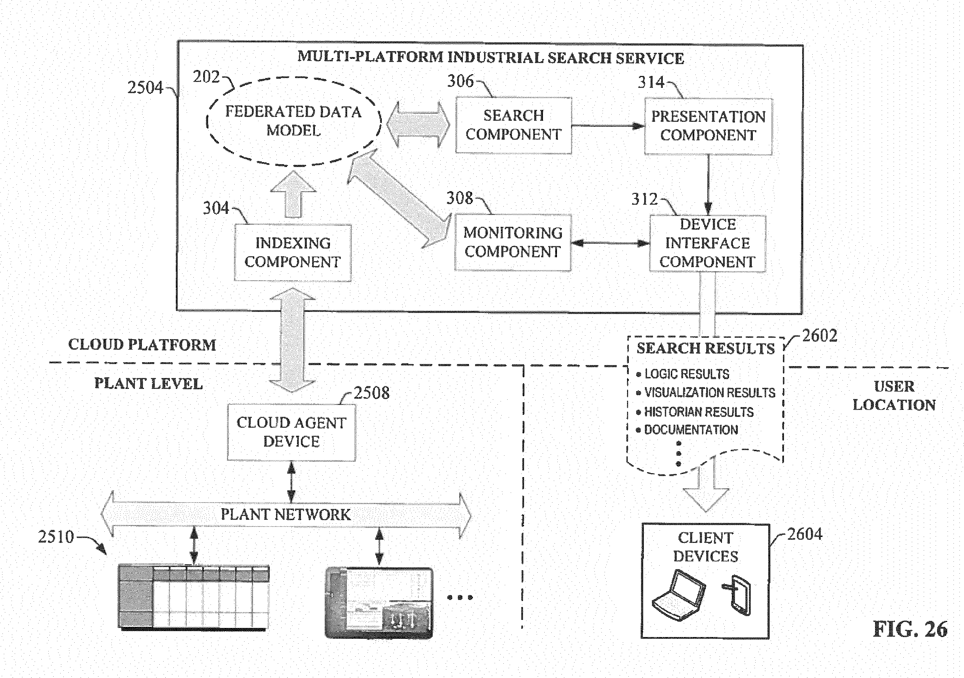

FIG. 26 is a block diagram illustrating a cloud-based industrial search service in more detail. As described in previous examples, indexing component 304 generates federated data model 202, which indexes and correlates multi-platform industrial data and documentation from on-premise industrial devices 2510. In this cloud-based implementation, the indexing component 304 may interface with the industrial devices 2510 via cloud agent device 2508. In some embodiments, cloud agent device 2508 may monitor industrial devices 2510 and their associated data items, index discovered data items throughout the industrial facility, and present this indexed information to indexing component 304, which incorporates the indexed information in federated data model 202. In other embodiments, cloud agent device 2508 may serve as a gateway between indexing component 304 and industrial devices 2510 on the plant floor, allowing indexing component to discover, correlate, and index the multi-platform data items in a similar manner to that described above in connection with FIG. 5.

Monitoring component 308, search component 306, indexing component 304, device interface component 312, and presentation component 314 perform similar functions to those described above in connection with FIG. 5. In this cloud-based implementation, device interface component 312 exchanges data with authorized client devices 2604 via the cloud platform. This can include receiving requests from the client devices 2604 for access to the industrial search service 2504 and verifying that the client devices 2604 are authorized to access and use the service (e.g., using password verification, biometric verification, etc.). Authorized client devices 2604, which can be located either within or outside the plant facility, can submit search queries to and receive search results 2602 from the cloud-based industrial search service 2504 as described in previous examples. Moreover, the monitoring component 308 can monitor one or more data items on industrial devices 2510 in accordance with defined monitoring rules (similar to monitoring rules 506 of FIG. 5), initiate defined automated searches in response to determinations that the monitored data satisfies criteria defined by the monitoring rules, and deliver suitable notifications to specified plant personnel, as described in previous examples. Since the notification service is implemented in a cloud platform, the system can deliver these notifications to client devices at any location with access to the Internet (e.g., wired, wireless, cellular, etc.).

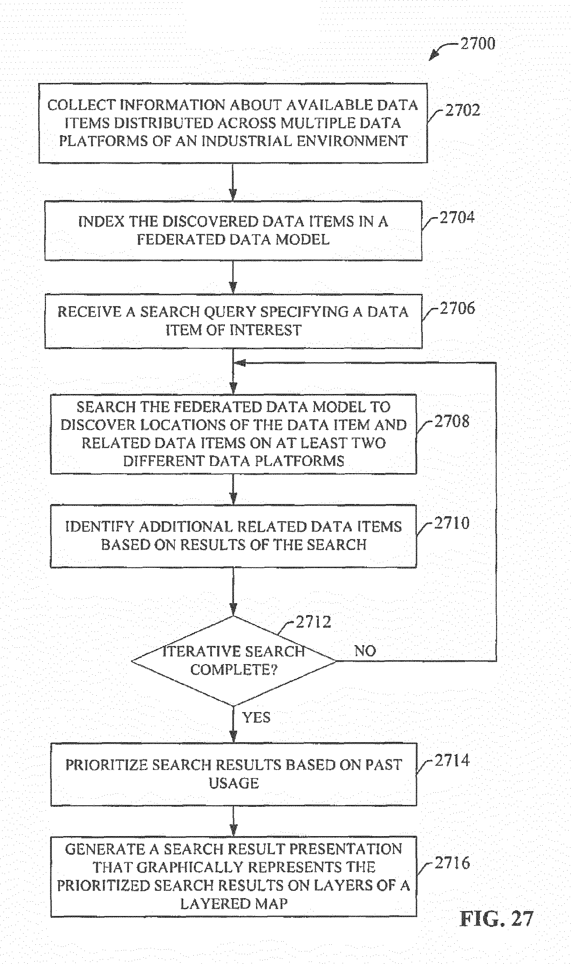

FIGs 27-28 illustrate various methodologies in accordance with one or more embodiments of the subject application. While, for purposes of simplicity of explanation, the one or more methodologies shown herein are shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 27 illustrates an example methodology 2700 for indexing and searching multi-platform industrial data. Initially, at 2702, information about available data items distributed across multiple data platforms of an industrial environment is collected. This information can be collected, for example, by an indexing component of an industrial search system implemented on a stand-alone server, a web server, a cloud platform, or other implementation. In some embodiments, the information can be collected using a crawler that navigates a plant network and collects information regarding devices and systems in use (e.g., industrial controllers, HMIs, motor drives, documentation repositories, inventory tracking systems, etc.), and the available data associated with each device or system. The indexing component can also identify correlations between data items across the various devices and data platforms (e.g., identifying that a data tag referenced on a particular rung of a control logic program is also referenced on a display screen of an HMI).

At 2704, the data items (and the relationships between the data items) discovered at step 2702 are indexed in a federated data model. At 2706, a search query specifying a data item of interest is received. The search query can specify, for example, a particular data tag, a device name, a machine name, or other such search criterion. At 2708, the federated data model is searched to discover locations of the specified data item (and related data items) on at least two different data platforms within the plant environment. For example, based on a search of the federated data model, it may be discovered that the specified data item is referenced on one or more rungs of a controller logic program executing on an industrial controller (a first platform), as well as on one or more display screens of an HMI (a second platform).

At 2710, additional related data items are identified based on results of the search performed at step 2708. For example, the search system may determine, based on examination of the search results, one or more data tags that affect the data item of interest (e.g., statuses of other devices, measured process variables involving other devices, etc.). The search system can perform additional searches on these newly discovered related data items in an iterative fashion until a defined completion criterion is met. Accordingly, at 2712, a determination is made regarding whether the iterative search is complete (e.g., based on satisfaction of the completion criterion). If the iterative search is not complete, the methodology returns to step 2710 and another search of the federated data model is performed using the specified data item and the additional related data items as search criteria. In this way, the search system iteratively cycles through the indexed information recorded in the federated data model until all relationships determined to be relevant to specified data item are found.

If it is determined at step 2712 that the iterative search is complete, the results of the iterative search (including, for example, instances of the data item of interest and the additional related data items) are prioritized at step 2714 based on past usage. For example, the system may prioritize search results based on a number of times each search result was selected by other users in connection with similar previously performed searches. At 2716, a search result presentation is generated at 2716 that graphically represents the prioritized search results - including the data item and the related data items - on layers of a layered map. For example, the search result presentation may comprise multiple layers of different scopes across which the search results are displayed. The layers can correspond to different hierarchical scopes (e.g., a physical layer, an alarms layer, a controller layer, an I/O layer, a network layer, etc.), where each layer displays at least a subset of the retrieved data items corresponding to the scope or granularity of that particular layer. The layers of the presentation can be viewed individually by navigating through the layers, or can be selectively added or removed from a composite presentation comprising multiple superimposed layers. The search results can be arranged or presented on the layers according to the priorities determined at step 2714 (e.g., by graphically presenting higher priority items more prominently than lower priority items).

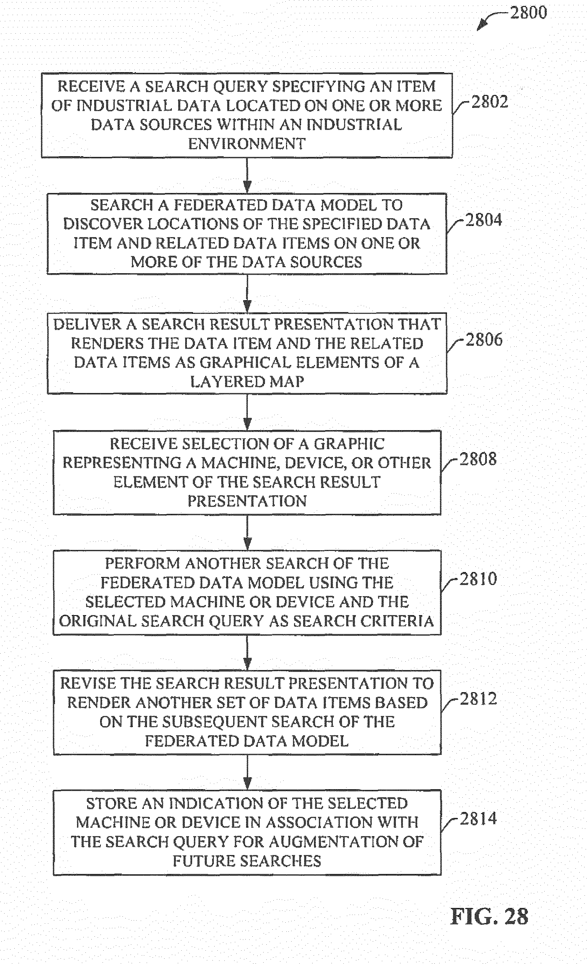

FIG. 28 illustrates an example methodology 2800 for performing multiple searches of a federated data model via interaction with a layered map search result interface. Initially, at 2802, a search query specifying an item of industrial data is received. The search query may specify an explicit name of the data item, or may comprise a search string representing a name of a machine, work area, device, etc. for which relevant data items are to be located. The data item may be located on one or more diverse data sources within an industrial environment. The search query may be received from a client device, or may be generated automatically in response to detection of a defined search trigger (e.g., a trigger indicative of a performance issue relating to an industrial automation system). At 2904, a federated data model is searched to discover locations of the specified data item and any other data items deemed relevant on one or more data sources (e.g., industrial controllers, HMIs, etc.) throughout the industrial environment. At 2806, a search result presentation is delivered that renders the data item and the related data items as graphical elements of a layered map.

At 2808, a selection of a graphic representing a machine, a device, or other element represented on the search result presentation is received via interaction with the search result presentation. At 2810, another search is performed of the federated data model using the machine, device, etc. selected at step 2808, as well as the original search query, as search criteria. In this way, the original search query can be refined by performing another search on the selected element using the original search query as additional context for the search. At 2812, the search result presentation is revised to render another set of data items based on the subsequent search of the federated data model. At 2814, the selection received at step 2808 is stored in association with the search query to be used to augment future similar searches. For example, if a similar search query is received at a future time, the system may augment the search query based on the machine or device previously selected at step 2808, without requiring the user to re-select the machine or device.

Embodiments, systems, and components described herein, as well as industrial control systems and industrial automation environments in which various aspects set forth in the subject specification can be carried out, can include computer or network components such as servers, clients, programmable logic controllers (PLCs), automation controllers, communications modules, mobile computers, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, instrumentation, and human machine interface (HMI) that communicate *via* the network, which includes control, automation, and/or public networks. The PLC or automation controller can also communicate to and control various other devices such as standard or safety-rated I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, and Ethernet/IP. Other networks include Ethernet, DH/DH+, Remote I/O, Fieldbus, Modbus, Profibus, CAN, wireless networks, serial protocols, near field communication (NFC), Bluetooth, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

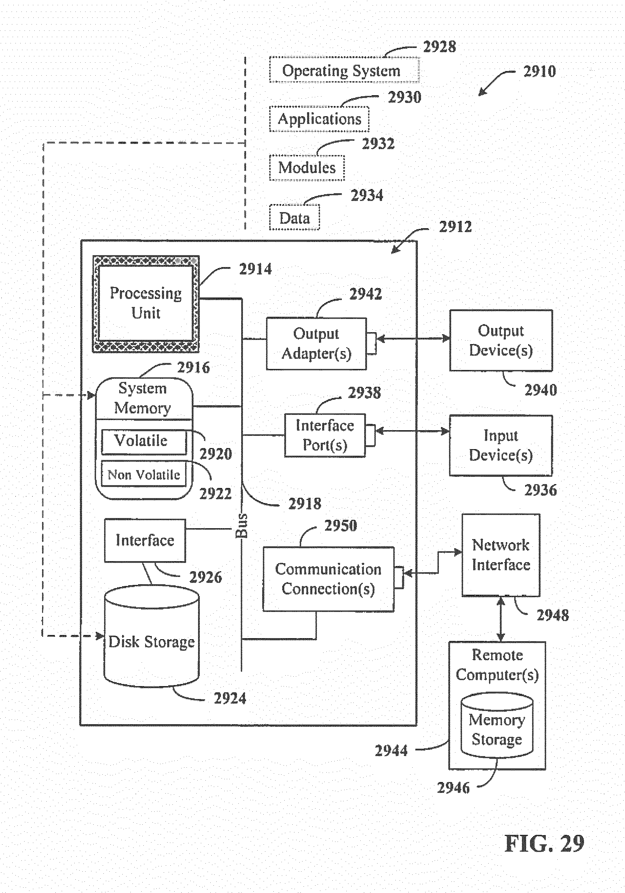

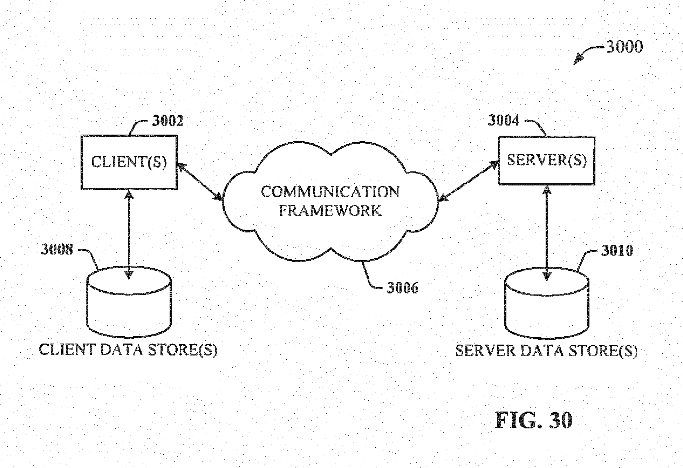

In order to provide a context for the various aspects of the disclosed subject matter, FIGs. 29 and 30 as well as the following discussion are intended to provide a brief, general description of a suitable environment in which the various aspects of the disclosed subject matter may be implemented.

With reference to FIG. 29, an example environment 2910 for implementing various aspects of the aforementioned subject matter includes a computer 2912. The computer 2912 includes a processing unit 2914, a system memory 2916, and a system bus 2918. The system bus 2918 couples system components including, but not limited to, the system memory 2916 to the processing unit 2914. The processing unit 2914 can be any of various available processors. Multi-core microprocessors and other multiprocessor architectures also can be employed as the processing unit 2914.

The system bus 2918 can be any of several types of bus structure(s) including the memory bus or memory controller, a peripheral bus or external bus, and/or a local bus using any variety of available bus architectures including, but not limited to, 8-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 2916 includes volatile memory 2920 and nonvolatile memory 2922. The basic input/output system (BIOS), containing the basic routines to transfer information between elements within the computer 2912, such as during start-up, is stored in nonvolatile memory 2922. By way of illustration, and not limitation, nonvolatile memory 2922 can include read only memory (ROM), programmable ROM (PROM), electrically programmable ROM (EPROM), electrically erasable PROM (EEPROM), or flash memory. Volatile memory 2920 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 2912 also includes removable/non-removable, volatile/nonvolatile computer storage media. FIG. 29 illustrates, for example a disk storage 2924. Disk storage 2924 includes, but is not limited to, devices like a magnetic disk drive, floppy disk drive, tape drive, Jaz drive, Zip drive, LS-100 drive, flash memory card, or memory stick. In addition, disk storage 2924 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage 2924 to the system bus 2918, a removable or non-removable interface is typically used such as interface 2926.

It is to be appreciated that FIG. 29 describes software that acts as an intermediary between users and the basic computer resources described in suitable operating environment 2910. Such software includes an operating system 2928. Operating system 2928, which can be stored on disk storage 2924, acts to control and allocate resources of the computer 2912. System applications 2930 take advantage of the management of resources by operating system 2928 through program modules 2932 and program data 2934 stored either in system memory 2916 or on disk storage 2924. It is to be appreciated that one or more embodiments of the subject disclosure can be implemented with various operating systems or combinations of operating systems.

A user enters commands or information into the computer 2912 through input device(s) 2936. Input devices 2936 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 2914 through the system bus 2918 *via* interface port(s) 2938. Interface port(s) 2938 include, for example, a serial port, a parallel port, a game port, and a universal serial bus (USB). Output device(s) 2940 use some of the same type of ports as input device(s) 2936. Thus, for example, a USB port may be used to provide input to computer 2912, and to output information from computer 2912 to an output device 2940. Output adapters 2942 are provided to illustrate that there are some output devices 2940 like monitors, speakers, and printers, among other output devices 2940, which require special adapters. The output adapters 2942 include, by way of illustration and not limitation, video and sound cards that provide a means of connection between the output device 2940 and the system bus 2918. It should be noted that other devices and/or systems of devices provide both input and output capabilities such as remote computer(s) 2944.

Computer 2912 can operate in a networked environment using logical connections to one or more remote computers, such as remote computer(s) 2944. The remote computer(s) 2944 can be a personal computer, a server, a router, a network PC, a workstation, a microprocessor based appliance, a peer device or other common network node and the like, and typically includes many or all of the elements described relative to computer 2912. For purposes of brevity, only a memory storage device 2946 is illustrated with remote computer(s) 2944. Remote computer(s) 2944 is logically connected to computer 2912 through a network interface 2948 and then physically connected *via* communication connection 2950. Network interface 2948 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL). Network interface 2948 can also encompass near field communication (NFC) or Bluetooth communication.

Communication connection(s) 2950 refers to the hardware/software employed to connect the network interface 2948 to the system bus 2918. While communication connection 2950 is shown for illustrative clarity inside computer 2912, it can also be external to computer 2912. The hardware/software necessary for connection to the network interface 2948 includes, for exemplary purposes only, internal and external technologies such as, modems including regular telephone grade modems, cable modems and DSL modems, ISDN adapters, and Ethernet cards.

FIG. 30 is a schematic block diagram of a sample computing environment 3000 with which the disclosed subject matter can interact. The sample computing environment 3000 includes one or more client(s) 3002. The client(s) 3002 can be hardware and/or software (e.g., threads, processes, computing devices). The sample computing environment 3000 also includes one or more server(s) 3004. The server(s) 3004 can also be hardware and/or software (e.g., threads, processes, computing devices). The servers 3004 can house threads to perform transformations by employing one or more embodiments as described herein, for example. One possible communication between a client 3002 and servers 3004 can be in the form of a data packet adapted to be transmitted between two or more computer processes. The sample computing environment 3000 includes a communication framework 3006 that can be employed to facilitate communications between the client(s) 3002 and the server(s) 3004. The client(s) 3002 are operably connected to one or more client data store(s) 3008 that can be employed to store information local to the client(s) 3002. Similarly, the server(s) 3004 are operably connected to one or more server data store(s) 3010 that can be employed to store information local to the servers 3004.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible. Accordingly, the disclosed subject matter is intended to embrace all such alterations, modifications, and variations that fall within the scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips...), optical disks [e.g., compact disk (CD), digital versatile disk (DVD)...], smart cards, and flash memory devices (e.g., card, stick, key drive...).

## Claims

1. A system (302) for searching industrial data, comprising:
a memory (320) that stores computer-executable components;
a processor (318), operatively coupled to the memory, that executes the computer-executable components, the computer-executable components comprising:
a search component (306) configured to perform a search of a federated data model (202) for a specified data item that identifies an industrial device and to generate a set of search results identifying locations of the data item and correlated data items within an industrial environment (100), wherein the federated data model records respective locations of available data items distributed across multiple data sources of the industrial environment;
a presentation component (314) configured to format the set of search results as a layered map presentation that displays the set of search results as graphical representations on multiple presentation layers corresponding to different views of the set of search results, wherein the multiple presentation layers comprise at least a physical layer (702) that renders at least a subset of the search results corresponding to one or more machines as graphical representations indicating a location of the one or more machines within the industrial environment;
a device interface component (312) configured to send the layered map presentation to a client device (204, 402, 1702, 1802, 1902, 2118, 2604); and
an application launching component (316) configured to remotely launch an industrial application (1706, 1722, 1808) on the client device or on another client device (1720) in response to selection, via interaction with the layered map presentation, of one of the graphical representations corresponding to one of the search results, wherein a separate application server (1814) hosts the industrial application and sends the industrial application to the client device or the another client device before the industrial application is launched on the client device or the another client device, and wherein the industrial application displays the control programming or the HMI screen associated with the search results represented by the selected graphical representation.

2. The system of claim 1, further comprising an indexing component (304) configured to discover the available data items distributed across the multiple data sources of the industrial environment and to index the available data items in the federated data model, wherein the multiple data sources comprise at least a first data source corresponding to a first data platform and a second data source corresponding to a second data platform.

3. The system of claim 1 or 2, wherein the multiple presentation layers further comprise at least one of an alarm layer (704) that renders another subset of the search results corresponding to active or historical alarms on or near the graphical representations corresponding to sources of the active or historical alarms, a controller layer (706) that graphically depicts one or more industrial controllers that interface with the one or more machines rendered in the physical layer and a location of the one or more controllers within the industrial environment, an I/O layer (708) that renders another subset of the search results as graphical representations of I/O devices associated with the one or more machines rendered on the physical layer and I/O data values associated with the respective I/O devices, or a network layer (710) that displays a graphical depiction of network devices and connections making up a network segment located in a portion of the industrial environment depicted on the physical layer.

4. The system of one of claims 1 to 3, wherein:
the presentation component is further configured to enable or disable selected layers of the multiple presentation layers in accordance with input data received via interaction with the layered map presentation; and/or
the multiple data sources comprise at least one of an industrial controller (404), a human-machine interface application (406), a data historian device (110), a work order management system, an inventory tracking system, an asset management system, a personnel database, a documentation data store, or a web-based data source; and/or
the search component is further configured to search multiple platform-specific federated data models asynchronously.

5. The system of claim 2, wherein the indexing component is further configured to associate weight values with selected subsets of the search results based on feedback data received via interaction with the layered map presentation, and to prioritize retrieval and presentation of the selected subsets of the search results for a subsequent search based on the weight values.

6. The system of one of claims 1 to 5, wherein the search component is further configured to perform a subsequent search of the federated data model in response to selection, via interaction with the layered map presentation, of one of the graphical representations corresponding to one of the search results, and wherein the subsequent search uses the one of the search results as a search criterion for the subsequent search.

7. The system of claim 3, wherein the presentation component is further configured to increase a level of informational detail for a selected portion of one of the multiple presentation layers in response to a zoom-in instruction, and to increase a viewing range of the one of the multiple presentation layers in response to a zoom-out instruction.

8. A method for searching and displaying multi-platform industrial data, comprising:
receiving (2706, 2802), by a system (302) comprising a processor (318), query information specifying a data item that identifies an industrial device;
in response to the receiving, identifying (2708, 2710, 2804), by the system, locations of the data item and other data items related to the data item within an industrial environment (100) based on a search of a federated data model (202) that indexes available data items located on multiple data sources of the industrial environment;
generating, by the system, search result data based on the identifying;
formatting, by the system, the search result data as a layered map presentation that displays the search result data as graphical representations on multiple presentation layers corresponding to different views of the search result data, wherein the formatting comprises generating, as one of the multiple presentation layers, a physical layer (702) that displays at least a subset of the search result data corresponding to one or more machines of the industrial environment as graphical machine representations;
sending, by the system, the layered map presentation to a client device (204, 402, 1702, 1802, 1902, 2118, 2604);
receiving, by the system, a launch request (1704, 1724, 1804) to remotely launch an industrial application (1706, 1722, 1808) on the client device or on another client device (1720) in response to selection, via interaction with the layered map presentation, of one of the graphical representations corresponding to one of the search results; and
in response to the receiving, remotely launching, by the system, the industrial application (1706, 1722, 1808) on the client device or on another client device (1720), wherein a separate application server (1814) hosts the industrial application and sends the industrial application to the client device or the another client device before the industrial application is launched on the client device or the another client device, and wherein the industrial application displays the control programming or the HMI screen associated with the search results represented by the selected graphical representation.

9. The method of claim 8, further comprising:
deploying a crawler entity that traverses a plant network of the industrial environment and discovers the available data items and interdependencies between at least a subset of the available data items; and
indexing the available data items and the interdependencies based on information generated by the crawler entity.

10. The method of claim 8 or 9, wherein:
the formatting comprises generating, as one of the multiple presentation layers, a controller layer (706) that displays one or more graphical controller representations corresponding to respective one or more controllers, and depicts which of the one or more machines are respectively controlled by the one or more controllers; or
the formatting comprises generating, as one of the multiple presentation layers, an I/O layer (708) that displays at least a subset of the search result data as graphical representations of I/O devices associated with the one or more machines displayed on the physical layer and I/O data values respectively associated with the I/O devices.

11. The method of one of claims 8 to 10, further comprising:
receiving input data via interaction with the layered map presentation indicating enablement or disablement one of the multiple presentation layers, and adding or removing the one of the multiple presentation layers from the layered map presentation in accordance with the input data; or
receiving input data, via interaction with the layered map presentation, comprising a message to be associated with a graphical representation of a machine or a device depicted on the layered map presentation, and displaying the message in association with the graphical representation on another layered map presentation sent to another client device in response to other query information received from the other client device.

12. A non-transitory computer-readable medium having stored thereon instructions that, in response to execution, cause a system comprising a processor (318) to perform operations, the operations comprising:
in response to receiving query information from a client device (204, 402, 1702, 1802, 1902, 2118, 2604) specifying a data item that identifies an industrial device, identifying locations of the data item based on a search of a federated data model (202) that indexes discovered instances of available data items located on multiple data sources of an industrial environment (100);
generating a set of search results based on the identifying;
formatting the set of search results as a layered map presentation that renders the set of search results as graphical representations on multiple presentation layers depicting respective different views of the search results, wherein the formatting comprises creating, as at least one of the multiple presentation layers, a physical layer (702) that displays at least a subset of the search results representing one or more machines of the industrial environment as graphical machine representations;
sending the layered map presentation to the client device;
receiving a launch request (1704, 1724, 1804) to remotely launch an industrial application (1706, 1722, 1808) on the client device or on another client device (1720) in
response to selection, via interaction with the layered map presentation, of one of the graphical representations corresponding to one of the search results; and
in response to the receiving the launch request (1704, 1724, 1804), remotely launching the industrial application (1706, 1722, 1808) on the client device or on another client device (1720),
wherein a separate application server (1814) hosts the industrial application and sends the industrial application to the client device or the another client device before the industrial
application is launched on the client device or the another client device, and wherein the
industrial application displays the control programming or the HMI screen associated with the search results represented by the selected graphical representation.

13. The non-transitory computer-readable medium of claim 12, wherein the formatting further comprises creating, as at least one of the multiple presentation layers, at least one of an alarm layer (704) that renders another subset of the search results corresponding to active or historical alarms on or near the graphical machine representations corresponding to sources of the active or historical alarms, a controller layer (706) that graphically depicts one or more industrial controllers that interface with the one or more machines rendered in the physical layer and a location of the one or more controllers within the industrial environment, an I/O layer (708) that renders another subset of the search results as graphical representations of I/O devices associated with the one or more machines rendered on the physical layer and I/O data values associated with the respective I/O devices, or a network layer (710) that displays a graphical depiction of network devices and connections making up a network segment located in a portion of the industrial environment depicted on the physical layer.

## Patentansprüche

1. System (302) zum Durchsuchen von industriellen Daten, umfassend:
einen Speicher (320), der computerausführbare Komponenten speichert;
einen Prozessor (318), der betriebsfähig mit dem Speicher verbunden ist, der die computerausführbaren Komponenten ausführt, wobei die computerausführbaren Komponenten umfassen:
eine Suchkomponente (306), die dazu konfiguriert ist, eine Suche eines föderierten Datenmodells (202) für ein bestimmtes Datenelement durchzuführen, das eine industrielle Vorrichtung definiert und einen Satz aus Suchergebnissen zu erzeugen, die Positionen des Datenelements sowie korrelierte Datenelemente innerhalb einer Industrieumgebung (100) identifizieren, wobei das föderierte Datenmodell die jeweiligen Positionen von verfügbaren Datenelementen aufzeichnet, die über multiple Datenquellen der Industrieumgebung verteilt sind;
eine Darstellungskomponente (314), die dazu konfiguriert ist, den Satz aus Suchergebnissen als eine geschichtete Kartendarstellung zu formatieren, die den Satz aus Suchergebnissen als Grafikdarstellungen auf multiplen Darstellungsschichten entsprechend verschiedenen Ansichten des Satzes aus Suchergebnissen anzeigt, wobei die multiplen Darstellungsschichten mindestens eine physische Schicht (702) umfassen, die mindestens einen Teilsatz der Suchergebnisse entsprechend einer oder mehreren Maschinen als Grafikdarstellungen wiedergibt, die eine Position der einen oder mehreren Maschinen in der Industrieumgebung anzeigen;
eine Vorrichtungsschnittstellenkomponente (312), die dazu konfiguriert ist, die geschichtete Kartendarstellung an eine Client-Vorrichtung (204, 402, 1702, 1802, 1902, 2118, 2604) zu senden; und
eine Anwendungsstartkomponente (316), die dazu konfiguriert ist, eine industrielle Anwendung (1706, 1722, 1808) auf der Client-Vorrichtung oder einer anderen Client-Vorrichtung (1720) in Reaktion auf eine Auswahl, mittels Interaktion mit der geschichteten Kartendarstellung, von einer der grafischen Darstellungen entsprechend einem der Suchergebnisse fernzustarten, wobei ein separater Anwendungsserver (1814) als Host für die industrielle Anwendung fungiert und die industrielle Anwendung an die Client-Vorrichtung oder die andere Vorrichtung sendet, bevor die industrielle Anwendung auf der Client-Vorrichtung oder der anderen Client-Vorrichtung gestartet wird, und wobei die industrielle Anwendung das Steuerungsprogramm oder den HMI-Bildschirm im Zusammenhang mit den Suchergebnissen anzeigt, die durch die ausgewählte grafische Darstellung dargestellt werden.

2. System nach Anspruch 1, des Weiteren umfassend eine Indizierungskomponente (304), die dazu konfiguriert ist, die verfügbaren Datenelemente zu finden, die auf die multiplen Datenquellen der Industrieumgebung verteilt sind, und die verfügbaren Datenelemente in dem föderierten Datenmodell zu indizieren, wobei die multiplen Datenquellen mindestens eine erste Datenquelle entsprechend einer ersten Datenplattform und eine zweite Datenquelle entsprechend einer zweiten Datenplattform umfassen.

3. System nach Anspruch 1 oder 2, wobei die multiplen Darstellungsschichten des Weiteren mindestens eine aus einer Alarmschicht (704) umfasst, die einen weiteren Teilsatz der Suchergebnisse entsprechend aktiven oder historischen Alarmen auf oder nahe den grafischen Darstellungen entsprechend Quellen der aktiven oder historischen Alarme wiedergibt, einer Steuerungsschicht (706), die grafisch eine oder mehrere Industriesteuerungen abbildet, die Schnittstellen mit den einen oder mehreren Maschinen aufweisen, die in der physikalischen Schicht wiedergegeben werden, und einen Standort der einen oder mehreren Steuerungen in der Industrieumgebung, und einer I/O-Schicht (708), die einen weiteren Teilsatz der Suchergebnisse als grafische Darstellungen von I/O-Vorrichtungen im Zusammenhang mit den einen oder mehreren Maschinen wiedergibt, die auf der physikalischen Schicht wiedergegeben werden sowie I/O-Datenwerte im Zusammenhang mit den jeweiligen I/O-Vorrichtungen, oder einer Netzwerkschicht (710), die eine grafische Darstellung von Netzwerkdiensten und Verbindungen anzeigt, welche ein Netzwerksegment bilden, das sich in einem Teil der Industrieumgebung befindet, die auf der physikalischen Schicht abgebildet ist.

4. System nach einem der Ansprüche 1 bis 3, wobei:
die Darstellungskomponente des Weiteren dazu konfiguriert ist, ausgewählte Schichten der multiplen Darstellungsschichten in Übereinstimmung mit Eingangsdaten zu aktivieren oder zu deaktivieren, die mittels Interaktion mit der geschichteten Kartendarstellung empfangen werden; und/oder
die multiplen Datenquellen mindestens eines aus einer Industriesteuerung (404), einer Mensch-Maschine-Schnittstellenanwendung (406), einer Datenverlaufsvorrichtung (110), einem Arbeitsauftragsverwaltungssystem, einem Inventarverfolgungssystem, einem Bestandsverwaltungssystem, einer Personaldatenbank, einem Dokumentationsdatenspeicher oder einer webbasierten Datenquelle ist; und/oder
die Suchkomponente des Weiteren dazu konfiguriert ist, multiple plattformspezifische föderierte Datenmodelle asynchron zu durchsuchen.

5. System nach Anspruch 2, wobei die Indizierungskomponente des Weiteren dazu konfiguriert ist, ausgewählten Teilsätzen der Suchergebnisse basierend auf Rückführungsdaten Gewichtungswerte zuzuordnen, die durch Interaktion mit der geschichteten Kartendarstellung empfangen werden, und Abruf und Darstellung der ausgewählten Teilsätze der Suchergebnisse für eine nachfolgende Suche basierend auf den Gewichtungswerten zu priorisieren.

6. System nach einem der Ansprüche 1 bis 5, wobei die Suchkomponente des Weiteren dazu konfiguriert ist, eine nachfolgende Durchsuchung des föderierten Datenmodells in Reaktion auf die Auswahl, mittels Interaktion mit der geschichteten Kartendarstellung, von einer der grafischen Darstellungen entsprechend einem der Suchergebnisse durchzuführen, und wobei die anschließende Suche das eine der Suchergebnisse als ein Suchkriterium für die nachfolgende Suche verwendet.

7. System nach Anspruch 3, wobei die Darstellungskomponente des Weiteren dazu konfiguriert ist, eine Stufe an Informationsdetails für einen ausgewählten Abschnitt von einer der multiplen Darstellungsschichten in Reaktion auf einen Vergrößerungsbefehl zu erhöhen, und einen Darstellungsbereich der einen der multiplen Darstellungsschichten in Reaktion auf einen Verkleinerungsbefehl zu vergrößern.

8. Verfahren zum Durchsuchen und Anzeigen von industriellen Daten auf mehreren Plattformen, umfassend:
Empfangen (2706, 2802), durch ein System (302), das einen Prozessor (318) umfasst, von Abfrageinformationen, die ein Datenelement spezifizieren, welches eine industrielle Vorrichtung identifiziert;
in Reaktion auf das Empfangen, Identifizieren (2708, 2710, 2804), durch das System, der Positionen des Datenelements und weiterer Datenelemente im Zusammenhang mit dem Datenelement innerhalb einer Industrieumgebung (100) basierend auf einer Durchsuchung eines föderierten Datenmodells (202), das verfügbare Datenelemente indiziert, die sich auf multiplen Datenquellen der Industrieumgebung befinden;
Erzeugen, durch das System, von Suchergebnisdaten basierend auf der Identifizierung;
Formatieren, durch das System, der Suchergebnisdaten als eine geschichtete Kartendarstellung, welche die Suchergebnisdaten als grafische Darstellungen auf multiplen Darstellungsschichten entsprechend verschiedenen Ansichten der Suchergebnisdaten anzeigt, wobei das Formatieren das Erzeugen, als eine der multiplen Darstellungsschichten, einer physikalischen Schicht (702) umfasst, welche mindestens einen Teilsatz der Suchergebnisdaten entsprechend einer oder mehreren Maschinen der Industrieumgebung als grafische Maschinendarstellungen anzeigt;
Senden, durch das System, der geschichteten Kartendarstellung an eine Client-Vorrichtung (204, 402, 1702, 1802, 1902, 2118, 2604);
Empfangen, durch das System, einer Startanforderung (1704, 1724, 1804) zum Fernstarten einer industriellen Anwendung (1706, 1822, 1808) auf der Client-Vorrichtung oder einer anderen Client-Vorrichtung (1720) in Reaktion auf eine Auswahl, durch Interaktion mit der geschichteten Kartendarstellung, von einer der grafischen Darstellungen entsprechend einem der Suchergebnisse; und
in Reaktion auf das Empfangen, Fernstarten, durch das System, der industriellen Anwendung (1706, 1722, 1808) auf der Client-Vorrichtung oder einer anderen Client-Vorrichtung (1720),
wobei ein separater Anwendungsserver (1814) als Host für die industrielle Anwendung fungiert und die industrielle Anwendung an die Client-Vorrichtung oder die andere Client-Vorrichtung sendet, bevor die industrielle Anwendung auf der Client-Vorrichtung oder der anderen Client-Vorrichtung gestartet wird, und
wobei die industrielle Anwendung die Steuerungsprogrammierung oder den HMI-Bildschirm im Zusammenhang mit den Suchergebnissen anzeigt, welche durch die ausgewählte grafische Darstellung dargestellt werden.

9. Verfahren nach Anspruch 8, des Weiteren umfassend:
Verwenden einer Crawler-Einheit, die ein Werksnetzwerk der Industrieumgebung durchläuft und die verfügbaren Datenelemente sowie gegenseitige Abhängigkeiten zwischen mindestens einem Teilsatz der verfügbaren Datenelemente entdeckt; und
Indizieren der verfügbaren Datenelemente und der gegenseitigen Abhängigkeiten basierend auf Informationen, die von der Crawler-Einheit erzeugt werden.

10. Verfahren nach Anspruch 8 oder 9, wobei:
das Formatieren das Erzeugen, als eine der multiplen Darstellungsschichten, einer Steuerungsschicht (706) umfasst, welche eine oder mehrere grafische Steuerungsdarstellungen entsprechend jeweils einer oder mehreren Steuerungen anzeigt und abbildet, welche der einen oder mehreren Maschinen jeweils durch die eine oder mehrere Steuerungen gesteuert werden; oder
das Formatieren das Erzeugen, als eine der multiplen Darstellungsschichten, einer I/O-Schicht (708) umfasst, die mindestens einen Teilsatz der Suchergebnisdaten als grafische Darstellungen von I/O-Vorrichtungen anzeigt, die den einen oder mehreren Maschinen zugeordnet sind, welche auf der physikalischen Schicht angezeigt werden, und I/O-Werte, die jeweils den I/O-Vorrichtungen zugeordnet sind.

11. Verfahren nach einem der Ansprüche 8 bis 10, des Weiteren umfassend:
Empfangen von Eingangsdaten durch Interaktion mit der geschichteten Kartendarstellung, welche die Aktivierung oder Deaktivierung von einer der multiplen Darstellungsschichten anzeigt, und Hinzufügen oder Entfernen der einen der multiplen Darstellungsschichten aus der geschichteten Kartendarstellung entsprechend den Eingangsdaten; oder
Empfangen von Eingangsdaten, durch Interaktion mit der geschichteten Kartendarstellung, umfassend eine Nachricht, die einer grafischen Darstellung einer Maschine oder einer Vorrichtung zugeordnet werden soll, die auf der geschichteten Kartendarstellung abgebildet wird, und Anzeigen der Nachricht im Zusammenhang mit der grafischen Darstellung auf einer weiteren geschichteten Kartendarstellung, die in Reaktion auf weitere Abfrageinformationen, die von der anderen Client-Vorrichtung empfangen werden, an die andere Client-Vorrichtung gesendet wird.

12. Nicht transitorisches computerlesbares Medium, auf dem computerausführbare Befehle gespeichert sind, die in Reaktion auf die Ausführung ein System umfassend einen Prozessor (318) zum Durchführen von Abläufen veranlassen, wobei die Abläufe umfassen:
in Reaktion auf das Empfangen von Abfrageinformationen von einer Client-Vorrichtung (204, 402, 1702, 1802, 1902, 2118, 2604), Spezifizieren eines Datenelements, das eine industrielle Vorrichtung identifiziert, Identifizieren der Positionen des Datenelements basierend auf einer Suche eines föderierten Datenmodells (202), das entdeckte Instanzen von verfügbaren Datenelementen indiziert, die sich auf multiplen Datenquellen einer Industrieumgebung (100) befinden;
Erzeugen eines Satzes von Suchergebnissen basierend auf der Identität;
Formatieren des Satzes aus Suchergebnissen als eine geschichtete Kartendarstellung, die den Satz aus Suchergebnissen als grafische Darstellungen auf multiplen Darstellungsschichten wiedergibt, welche jeweils andere Ansichten der Suchergebnisse abbilden, wobei das Formatieren das Erstellen, als mindestens eine der multiplen Darstellungsschichten, einer physikalischen Schicht (702) umfasst, die mindestens einen Teilsatz der Suchergebnisse anzeigt, welche eine oder mehrere Maschinen der Industrieumgebung als grafische Maschinendarstellungen darstellt;
Senden der geschichteten Kartendarstellung an die Client-Vorrichtung;
Empfangen einer Startanforderung (1704, 1724, 1804) zum Fernstarten einer industriellen Anwendung (1706, 1722, 1808) auf der Client-Vorrichtung oder einer anderen Client-Vorrichtung (1720) in Reaktion auf die Auswahl, durch Interaktion mit der geschichteten Kartendarstellung, von einer der grafischen Darstellungen entsprechend einem der Suchergebnisse; und
in Reaktion auf das Empfangen der Startanforderung (1704, 1724, 1804), Fernstarten der industriellen Anwendung (1706, 1722, 1808) auf der Client-Vorrichtung oder einer anderen Client-Vorrichtung (1720),
wobei ein separater Anwendungsserver (1804) als Host für die industrielle Anwendung fungiert und die industrielle Anwendung an die Client-Vorrichtung oder die andere Client-Vorrichtung sendet, bevor die industrielle Anwendung auf der Client-Vorrichtung oder der anderen Client-Vorrichtung gestartet wird, und
wobei die industrielle Anwendung die Steuerungsprogrammierung oder den HMI-Bildschirm im Zusammenhang mit den Suchergebnissen anzeigt, welche durch die ausgewählte grafische Darstellung dargestellt werden.

13. Nicht flüchtiges, computerlesbares Medium nach Anspruch 12,
wobei das Formatieren des Weiteren das Erstellen, als mindestens eine der multiplen Darstellungsschichten, von mindestens einer aus einer Alarmschicht (704) umfasst, die einen weiteren Teilsatz der Suchergebnisse entsprechend aktiven oder historischen Alarmen auf oder nahe der grafischen Maschinendarstellungen entsprechend Quellen der aktiven oder historischen Alarme wiedergibt, einer Steuerungsschicht (706), die grafisch eine oder mehrere Industriesteuerungen darstellt, welche Schnittstellen mit den einen oder mehreren Maschinen aufweisen, die in der physikalischen Schicht wiedergegeben werden, und eine Position der einen oder mehreren Steuerungen in der Industrieumgebung, einer I/O-Schicht (708), die einen weiteren Teilsatz der Suchergebnisse als grafische Darstellungen von I/O-Vorrichtungen im Zusammenhang mit den einen oder mehreren Maschinen wiedergibt, die auf der physikalischen Schicht wiedergegeben werden, und I/O-Datenwerte im Zusammenhang mit den jeweiligen I/O-Vorrichtungen, oder einer Netzwerkschicht (710), die eine grafische Abbildung der Netzwerkvorrichtungen und Verbindungen anzeigt, welche ein Netzwerksegment bilden, das sich in einem Teil der Industrieumgebung befindet, die auf der physikalischen Schicht abgebildet wird.

## Revendications

1. Système (302) de recherche de données industrielles, comprenant :
une mémoire (320) qui stocke des composants exécutables par ordinateur ;
un processeur (318), couplé de manière opérationnelle à la mémoire, qui exécute les composants exécutables par ordinateur, les composants exécutables par ordinateur comprenant :
un composant de recherche (306) configuré pour effectuer une recherche d'un modèle de données fédéré (202) pour un élément de données spécifié qui identifie un dispositif industriel et générer un ensemble de résultats de recherche identifiant des emplacements de l'élément de données et d'éléments de données corrélés dans un environnement industriel (100), dans lequel le modèle de données fédéré enregistre des emplacements respectifs d'éléments de données disponibles répartis à travers de multiples sources de données de l'environnement industriel ;
un composant de présentation (314) configuré pour formater l'ensemble de résultats de recherche sous forme d'une présentation cartographique en couches qui affiche l'ensemble de résultats de recherche sous forme de représentations graphiques sur de multiples couches de présentation correspondant à différentes vues de l'ensemble de résultats de recherche, dans lequel les multiples couches de présentation comprennent au moins une couche physique (702) qui restitue au moins un sous-ensemble des résultats de recherche correspondant à une ou plusieurs machines sous forme de représentations graphiques indiquant un emplacement des une ou plusieurs machines dans l'environnement industriel ;
un composant d'interface de dispositif (312) configuré pour envoyer la présentation cartographique en couches à un dispositif client (204, 402, 1702, 1802, 1902, 2118, 2604) ; et
un composant de lancement d'application (316) configuré pour lancer à distance une application industrielle (1706, 1722, 1808) sur le dispositif client ou sur un autre dispositif client (1720) en réponse à une sélection, via interaction avec la présentation cartographique en couches, de l'une des représentations graphiques correspondant à l'un des résultats de recherche, dans lequel un serveur d'application séparé (1814) héberge l'application industrielle et envoie l'application industrielle au dispositif client ou à l'autre dispositif client avant le lancement de l'application industrielle sur le dispositif client ou l'autre client dispositif, et dans lequel l'application industrielle affiche la programmation de commande ou l'écran HMI associé aux résultats de recherche représentés par la représentation graphique sélectionnée.

2. Système selon la revendication 1, comprenant en outre un composant d'indexation (304) configuré pour découvrir les éléments de données disponibles répartis à travers les multiples sources de données de l'environnement industriel et indexer les éléments de données disponibles dans le modèle de données fédéré, dans lequel les multiples sources de données comprennent au moins une première source de données correspondant à une première plate-forme de données et une seconde source de données correspondant à une seconde plate-forme de données.

3. Système selon la revendication 1 ou 2, dans lequel les multiples couches de présentation comprennent en outre au moins une couche d'alarme (704) qui restitue un autre sous-ensemble des résultats de recherche correspondant à des alarmes actives ou historiques sur ou près des représentations graphiques correspondant à des sources des alarmes actives ou historiques, une couche de dispositif de commande (706) qui représente graphiquement un ou plusieurs dispositifs de commande industriels qui s'interfacent avec les une ou plusieurs machines restituées dans la couche physique et un emplacement des un ou plusieurs dispositifs de commande dans l'environnement industriel, une couche I/O (708) qui restitue un autre sous-ensemble des résultats de recherche sous forme de représentations graphiques de dispositifs I/O associés aux une ou plusieurs machines restituées sur la couche physique et de valeurs de données I/O associées aux dispositifs I/O respectifs, ou une couche de réseau (710) qui affiche une représentation graphique de dispositifs de réseau et de connexions formant un segment de réseau situé dans une partie de l'environnement industriel représenté sur la couche physique.

4. Système selon l'une des revendications 1 à 3, dans lequel :
le composant de présentation est en outre configuré pour activer ou désactiver des couches sélectionnées des multiples couches de présentation en fonction de données d'entrée reçues via interaction avec la présentation cartographique en couches ; et/ou
les multiples sources de données comprennent au moins l'un parmi un dispositif de commande industriel (404), une application d'interface homme-machine (406), un dispositif d'historisation de données (110), un système de gestion d'ordres de travail, un système de suivi de stock, un système de gestion de ressources, une base de données d'effectifs, une mémoire de données de documentation, ou une source de données Web ; et/ou
le composant de recherche est en outre configuré pour rechercher de manière asynchrone de multiples modèles de données fédérés spécifiques à une plate-forme.

5. Système selon la revendication 2, dans lequel le composant d'indexation est en outre configuré pour associer des valeurs de pondération à des sous-ensembles sélectionnés des résultats de recherche sur la base de données de rétroaction reçues via interaction avec la présentation cartographique en couches, et pour prioriser une récupération et une présentation des sous-ensembles sélectionnés des résultats de la recherche pour une recherche ultérieure basée sur les valeurs de pondération.

6. Système selon l'une des revendications 1 à 5, dans lequel le composant de recherche est en outre configuré pour effectuer une recherche ultérieure du modèle de données fédéré en réponse à une sélection, via interaction avec la présentation cartographique en couches, d'une des représentations graphiques correspondant à l'un des résultats de recherche, et dans lequel la recherche ultérieure utilise l'un des résultats de recherche en tant que critère de recherche pour la recherche ultérieure.

7. Système selon la revendication 3, dans lequel le composant de présentation est en outre configuré pour augmenter un niveau de détail informationnel pour une partie sélectionnée de l'une des multiples couches de présentation en réponse à une instruction de zoom avant, et pour augmenter une plage de visualisation de l'une des multiples couches de présentation en réponse à une instruction de zoom arrière.

8. Procédé de recherche et d'affichage de données industrielles multiplateformes, comprenant de :
recevoir (2706, 2802), par un système (302) comprenant un processeur (318), des informations d'interrogation spécifiant un élément de données qui identifie un dispositif industriel ;
en réponse à la réception, identifier (2708, 2710, 2804), par le système, des emplacements de l'élément de données et d'autres éléments de données associés à l'élément de données dans un environnement industriel (100) sur la base d'une recherche d'un modèle de données fédéré (202) qui indexe des éléments de données disponibles situés sur de multiples sources de données de l'environnement industriel ;
générer, par le système, des données de résultat de recherche sur la base de l'identification ;
formater, par le système, les données de résultat de recherche sous forme d'une présentation cartographique en couches qui affiche les données de résultat de recherche sous forme de représentations graphiques sur de multiples couches de présentation correspondant à différentes vues des données de résultat de recherche, le formatage comprenant de générer, en tant qu'une des multiples couches de représentation, une couche physique (702) qui affiche au moins un sous-ensemble des données de résultat de recherche correspondant à une ou plusieurs machines de l'environnement industriel en tant que représentations de machine graphiques ;
envoyer, par le système, la présentation cartographique en couches à un dispositif client (204, 402, 1702, 1802, 1902, 2118, 2604) ;
recevoir, par le système, une demande de lancement (1704, 1724, 1804) pour lancer à distance une application industrielle (1706, 1722, 1808) sur le dispositif client ou sur un autre dispositif client (1720) en réponse à une sélection, via interaction avec la présentation cartographique en couches, de l'une des représentations graphiques correspondant à l'un des résultats de recherche ; et
en réponse à la réception, lancer à distance, par le système, l'application industrielle (1706, 1722, 1808) sur le dispositif client ou sur un autre dispositif client (1720),
dans lequel un serveur d'application séparé (1814) héberge l'application industrielle et envoie l'application industrielle au dispositif client ou à l'autre dispositif client avant le lancement de l'application industrielle sur le dispositif client ou l'autre dispositif client, et dans lequel l'application industrielle affiche la programmation de commande ou l'écran HMI associé aux résultats de recherche représentés par la représentation graphique sélectionnée.

9. Procédé selon la revendication 8, comprenant en outre de :
déployer une entité de robot d'exploration qui traverse un réseau d'installations de l'environnement industriel et explore les éléments de données disponibles et des interdépendances entre au moins un sous-ensemble des éléments de données disponibles ; et
indexer les éléments de données disponibles et les interdépendances sur la base d'informations générées par l'entité de robot d'exploration.

10. Procédé selon la revendication 8 ou 9, dans lequel :
le formatage comprend de générer, en tant que l'une des multiples couches de présentation, une couche de dispositif de commande (706) qui affiche une ou plusieurs représentations graphiques de dispositif de commande correspondant à un ou plusieurs dispositifs de commande respectifs, et représente lesquelles des une ou plusieurs machines sont respectivement commandées par les un ou plusieurs dispositifs de commande ; ou
le formatage comprend de générer, en tant que l'une des multiples couches de présentation, une couche I/O (708) qui affiche au moins un sous-ensemble des données de résultat de recherche sous forme de représentations graphiques des dispositifs I/O associés aux une ou plusieurs machines affichées sur la couche physique et des valeurs de données I/O respectivement associées aux dispositifs I/O.

11. Procédé selon l'une des revendications 8 à 10, comprenant en outre de :
recevoir des données d'entrée via interaction avec la présentation cartographique en couches indiquant l'activation ou la désactivation de l'une des multiples couches de présentation, et ajouter ou retirer l'une des multiples couches de présentation de la présentation cartographique en couches conformément aux données d'entrée ; ou
recevoir des données d'entrée, via interaction avec la présentation cartographique en couches, comprenant un message à associer à une représentation graphique d'une machine ou d'un dispositif représenté sur la présentation cartographique en couches, et afficher le message en association avec la représentation graphique sur une autre présentation cartographique en couches envoyée à un autre dispositif client en réponse à d'autres informations d'interrogation reçues depuis l'autre dispositif client.

12. Support non transitoire lisible par ordinateur sur lequel sont stockées des instructions qui, en réponse à une exécution, amènent un système comprenant un processeur (318) à effectuer des opérations, les opérations comprenant de :
en réponse à une réception d'informations d'interrogation provenant d'un dispositif client (204, 402, 1702, 1802, 1902, 2118, 2604) spécifiant un élément de données qui identifie un dispositif industriel, identifier des emplacements de l'élément de données sur la base d'une recherche d'un modèle de données fédéré (202) qui indexe des exemples découverts d'éléments de données disponibles situés sur de multiples sources de données d'un environnement industriel (100) ;
générer un ensemble de résultats de recherche sur la base de l'identification ;
formater l'ensemble de résultats de recherche sous forme d'une présentation cartographique en couches qui restitue l'ensemble de résultats de recherche sous forme de représentations graphiques sur de multiples couches de présentation représentant différentes vues des résultats de recherche, le formatage comprenant de créer, en tant qu'une des multiples couches de représentation, une couche physique (702) qui affiche au moins un sous-ensemble des résultats de recherche représentant une ou plusieurs machines de l'environnement industriel sous forme de représentations graphiques de machine ;
envoyer la présentation cartographique en couches au dispositif client ;
recevoir une demande de lancement (1704, 1724, 1804) pour lancer à distance une application industrielle (1706, 1722, 1808) sur le dispositif client ou sur un autre dispositif client (1720) en réponse à une sélection, via interaction avec la présentation cartographique en couches, de l'une des représentations graphiques correspondant à l'un des résultats de recherche ; et
en réponse à la réception de la demande de lancement (1704, 1724, 1804), lancer à distance l'application industrielle (1706, 1722, 1808) sur le dispositif client ou sur l'autre dispositif client (1720),
dans lequel un serveur d'application séparé (1814) héberge l'application industrielle et envoie l'application industrielle au dispositif client ou à l'autre dispositif client avant le lancement de l'application industrielle sur le dispositif client ou l'autre dispositif client, et dans lequel l'application industrielle affiche la programmation de commande ou l'écran HMI associé aux résultats de recherche représentés par la représentation graphique sélectionnée.

13. Support non transitoire lisible par un ordinateur selon la revendication 12, dans lequel le formatage comprend en outre la création, en tant qu'au moins l'une des multiples couches de présentation, d'au moins une couche d'alarme (704) qui restitue un autre sous-ensemble des résultats de recherche correspondant à des alarmes actives ou historiques sur ou près des représentations graphiques correspondant à des sources des alarmes actives ou historiques, d'une couche de dispositif de commande (706) représentant graphiquement un ou plusieurs dispositifs de commande industriels qui s'interfacent avec les une ou plusieurs machines restituées dans la couche physique et un emplacement des un ou plusieurs dispositifs de commande dans l'environnement industriel, d'une couche I/O (708) qui restitue un autre sous-ensemble des résultats de la recherche sous forme de représentations graphiques de dispositifs I/O associés aux une ou plusieurs machines restituées sur la couche physique et des valeurs de données I/O associées aux dispositifs I/O respectifs; ou une couche réseau (710) qui affiche une représentation graphique de dispositifs de réseau et de connexions formant un segment de réseau situé dans une partie de l'environnement industriel représenté sur la couche physique.
